# EUROPEAN PATENT APPLICATION

(11) **EP 4 742 751 A1**
(43) Date of publication of application: **13.05.2026**
(21) Application number: 24211669.7
(22) Date of filing: 08.11.2024
(51) Int. Cl.: H04W 36/00

(54) **COMMUNICATION DEVICE AND BASE STATION INVOLVED IN A MEASUREMENT GAP SKIPPING PROCEDURE**

(71) Applicant: Panasonic Intellectual Property Corporation of America, Torrance, CA 90504 (US)
(72) Inventor: SHARIATMADARI, Hamidreza, 63225 Langen (DE); SUZUKI, Hidetoshi, Osaka, 571-8501 (JP)
(74) Representative: Grünecker Patent- und Rechtsanwälte PartG mbB

(57) **Abstract**

The present disclosure relates to a communication device comprising the following. The communication device includes a processing circuitry, which determines a time offset, which is associated with a measurement gap, MG, and is usable for determining whether to skip the MG or not. Determining the time offset is based on a configuration of a time offset, which defines an initial time offset, and based on additional information.

## Description

### FIELD OF THE PRESENT DISCLOSURE

The present disclosure is directed to methods, devices and articles in communication systems, such as 3GPP communication systems.

### TECHNICAL BACKGROUND

Currently, the 3rd Generation Partnership Project (3GPP) works at the technical specifications for the new radio access technology - 5G NR (New Radio), which is also called fifth generation (5G) or NR and used interchangeably herein.

One objective is to provide a single technical framework addressing all usage scenarios, requirements and deployment scenarios (see e.g., section 6 of 3GPP TR 38.913 e.g., version 16.0.0 or version 17.0.0 or version 18.0.0), at least including enhanced mobile broadband (eMBB), ultra-reliable low-latency communications (URLLC), and massive machine type communication (mMTC). For example, eMBB deployment scenarios may include indoor hotspot, dense urban, rural, urban macro and high speed; URLLC deployment scenarios may include industrial control systems, mobile health care (remote monitoring, diagnosis and treatment), real time control of vehicles, wide area monitoring and control systems for smart grids; mMTC deployment scenarios may include scenarios with large number of devices with non-time critical data transfers such as smart wearables and sensor networks. The services eMBB and URLLC are similar in that they both demand a very broad bandwidth, while they are different in that the URLLC service may preferably require ultra-low latencies.

A second objective is to achieve forward compatibility, which facilitates a completely new system design and/or the introduction of novel features.

### SUMMARY

One non-limiting and exemplary embodiment facilitates providing a user equipment to perform an improved measurement gap skipping procedure.

In an embodiment, the techniques disclosed here feature a communication device comprising the following. The communication device includes a processing circuitry, which determines a time offset, which is associated with a measurement gap, MG, and is usable for determining whether to skip the MG or not. Determining the time offset is based on a configuration of a time offset, which defines an initial time offset, and based on additional information.

Additional benefits and advantages of the disclosed embodiments and different implementations will be apparent from the specification and figures. The benefits and/or advantages may be individually obtained by the various embodiments and feature1s of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: shows an exemplary architecture for a 3GPP NR system to which the improved procedures of the present disclosure may be applied;
- **Fig. 2**: illustrates the arrival of video frame data and a configured measurement gap pattern;
- **Fig. 3, 4 and 5**: illustrate examples of a disadvantageous measurement gap skipping procedure;
- **Fig. 6**: illustrates an exemplary and simplified structure of a communication device, such as UE, and a base station,
- **Fig. 7**: illustrates a structure of the communication device, such as the UE, according to an exemplary implementation of the improved MG skipping procedure,
- **Fig. 8**: illustrates a flow diagram for the UE behavior according to an exemplary implementation of the improved MG skipping procedure,
- **Fig. 9**: illustrates a structure of the communication device, such as the base station, according to an exemplary implementation of the improved MG skipping procedure,
- **Fig. 10**: illustrates a flow diagram for the base station behavior, according to an exemplary implementation of the improved MG skipping procedure,
- **Fig. 11**: is a signaling diagram illustrating an exemplary exchange between the UE and the gNB for an exemplary implementation of the improved MG skipping procedure,
- **Fig. 12**: is another signaling diagram illustrating an exemplary exchange between the UE and the gNB for another more detailed exemplary implementation of the improved MG skipping procedure,
- **Fig. 13**: an exemplary implementation of the First Solution of the improved MG skipping procedure,
- **Fig. 14**: illustrates another exemplary implementation of the First Solution of the improved MG skipping procedure,
- **Fig. 15**: illustrates an exemplary implementation of the First Variant of the Second Solution of the improved MG skipping procedure,
- **Fig. 16**: illustrates an exemplary implementation of the Second Variant of the Second Solution of the improved MG skipping procedure,
- **Fig. 17**: illustrates an exemplary implementation of the First Variant of the Third Solution of the improved MG skipping procedure,
- **Fig. 18**: illustrates an exemplary implementation of the Second Variant of the Third Solution of the improved MG skipping procedure,
- **Fig. 19**: illustrates an exemplary implementation of the Fourth Solution of the improved MG skipping procedure, and
- **Fig. 20**: shows exemplary functional split options in 5G open-radio access network (O-RAN).

### DETAILED DESCRIPTION

### 5G NR system architecture and protocol stacks

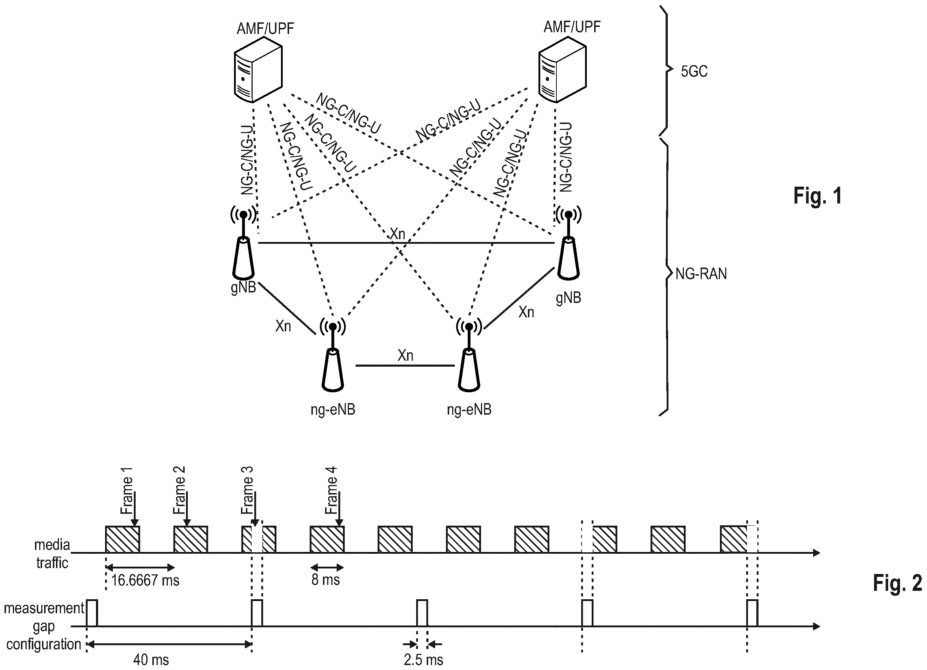

5G NR system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in **Fig. 1** (see e.g. 3GPP TS 38.300 v18.3.0, section 4).

### XR - extended Reality in Rel. 18

A 3GPP study item relates to extended Reality (XR) in RAN 1 and RAN 2. The aim is to provide efficient communications for augmented reality (AR), virtual reality (VR), mixed reality (MR) and cloud gaming, while reducing the power consumption and increasing the system capacity. In particular, techniques are studied for XR (eXtended Reality), e.g. to accommodate XR service characteristics, such as periodicity, multiple flows, jitter, latency, reliability, etc. The considered XR applications require a high data rate in downlink (DL) and uplink (UL) with a relatively strict packet delay budget (PDB).

Furthermore, some of the XR applications run on devices with a limited source of energy, such as wearable glasses or handheld devices. Thus, energy efficiency is an important concern.

The XR applications impose a variety of data traffics, including video streams and pose/control traffics. The video frames are quite large with varying sizes. They are characterized as quasi-periodic, because video frames arrive over a jitter time window. In addition, the periodicity of the jitter time window is non-integer regarding time resource units such as radio frames / slots / symbols.
- Packet size: For a high-quality video stream, the frame size would be around 1M bits after compression for an 8K video. This leads to having large size packets.
- Varying size: The frame sizes could vary e.g. due to the I-frame or P-frame/B-frame.
- Periodicities: A video stream generally generates 60/90/120 fps, which correspond to the periodicity of 16.667, 11.111, and 8.333 ms, respectively.
- Jitter: The frame packets would arrive at the gNB/UE over a jitter time window of e.g. [-4, 4] ms or even a larger jitter time window.
- Delay budget: The delay budget for delivering the XR packets could be tight, for instance, 10ms for AR/VR and 15ms for cloud gaming.
3GPP is working on further enhancing the XR support.

### Downlink Control Information

PDCCH monitoring is done by the UE so as to identify and receive information intended for the UE, such as the control information as well as the user traffic (e.g. the DCI on the PDCCH, and the user data on the PDSCH indicated by the PDCCH).

Control information in the downlink (can be termed, e.g., downlink control information, DCI) has basically the same purpose in 5G NR as the DCI in LTE, namely being a special set of control information that e.g. schedules a downlink data channel (e.g. the PDSCH) or an uplink data channel (e.g. PUSCH). In an exemplary 5G NR compliant implementation, there are a number of different DCI formats defined already (see 3GPP TS 38.212 e.g. v18.4.0 section 7.3.1). An overview is given by the following table.

| **DCI format** | **Usage** |
|---|---|
| 0_0 | Scheduling of PUSCH in one cell |
| 0_1 | Scheduling of one or multiple PUSCH in one cell, or indicating downlink feedback information for configured grant PUSCH (CG-DFI) |
| 0_2 | Scheduling of PUSCH in one cell |
| 0_3 | Scheduling of one PUSCH in one cell, or multiple PUSCHs in multiple cells with one PUSCH per cell |
| 1_0 | Scheduling of PDSCH in one cell |
| 1_1 | Scheduling of one or multiple PDSCH in one cell, and/or triggering one shot HARQ-ACK codebook feedback |
| 1_2 | Scheduling of PDSCH in one cell |
| 1_3 | Scheduling of one PDSCH in one cell, or multiple PDSCHs in multiple cells with one PDSCH per cell |
| 2_0 | Notifying a group of UEs of the slot format, available RB sets, COT duration and search space set group switching |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions bv one or more UEs |
| 2_4 | Notifying a group of UEs of the PRB(s) and OFDM symbol(s) where UE cancels the corresponding UL transmission from the UE |
| 2_5 | Notifying the availability of soft resources as defined in Clause 9.3.1 of [10, TS 38.473] |
| 2_6 | Notifying the power saving information outside DRX Active Time for one or more UEs |
| 2_7 | Notifying paging early indication and TRS availability indication for one or more UEs. |
| 2_8 | Notifying the aperiodic beam indication and associated time resources |
| 2_9 | Activating or de-activating the cell DTX and/or DRX configuration of one or multiple serving cells for one or more UEs, and/or for providing NES-mode indication of the primary cell for one or more UEs |
| 3_0 | Scheduling of NR sidelink in one cell |
| 3_1 | Scheduling of LTE sidelink in one cell |
| 3_2 | Scheduling of NR SL PRS in one cell |
| 4_0 | Scheduling of PDSCH with CRC scrambled by MCCH-RNTI/G-RNTI for broadcast or by Multicast MCCH-RNTI for multicast in RRC_INACITIVE state |
| 4_1 | Scheduling of PDSCH with CRC scrambled by G-RNTI/G-CS-RNTI for multicast in RRC CONNECTED state or bv G-RNTI for multicast in RRC_INACITIVE state |
| 4_2 | Scheduling of PDSCH with CRC scrambled by G-RNTI/G-CS-RNTI for multicast in RRC CONNECTED state |

In 5G NR, PDCCH is transmitted in radio resource regions called control resource sets (CORESETs). In LTE, the concept of a CORESET is not explicitly present. Instead, PDCCH in LTE uses the full carrier bandwidth in the first 1-3 OFDM symbols (four for the most narrowband case). By contrast, a CORESET in 5G NR can occur at any position within a slot and anywhere in the frequency range of the carrier, except that the UE is not expected to handle CORESETs outside its active bandwidth part (BWP).

Search space sets are monitored in one or more CORESETs on the active DL BWP on each activated serving cell configured with PDCCH monitoring using the corresponding search space sets, where monitoring implies decoding each PDCCH candidate according to the monitored DCI formats.

### Measurement gap (MG)

3GPP supports measurement gaps (which sometimes are also referred to as "measurement restrictions"). The MG is configured for the UE to perform measurements when the UE cannot simultaneously measure the target carrier frequency while transmitting/receiving on the serving cell. In other words, the MG is a period of time during which the device's transceiver is temporarily inactive for receiving or transmitting in the serving cell, but is instead used to perform radio measurements, for instance radio resource management (RRM) measurements, in a target carrier. The MG gap allows the device to perform various measurements without interfering with ongoing transmissions. One example implementation of a corresponding measurement procedure is defined in 3GPP, e.g. in Technical Standard 3GPP TS 38.133, version 18.7.0, Chapter 9.

According to configuration, the MG lengths could be 1.5, 3, 3.5, 4, 5.5, and 6 ms, which MG repetition periodicities could be 20, 40, 80, and 160 ms. An RF re-tuning time is applied before and after the measurement gap, which is 0.5 ms for carrier frequency measurements in the Frequency Range 1, FR1 (e.g. for bands within 410 MHz and 7 215 MHz) and is 0.25 ms in FR2 (e.g. for bands within 24.25 GHz and 71 GHz).

The need for a MG in NR may further depend on the capability of the UE, the active BWP of the UE and the current operating frequency. In NR, MGs may be configured for performing one or more of intra-frequency, inter-frequency and inter-RAT measurements.

The UEs shall support the MG patterns listed in the following table 1:

**Table 1**

| **MG Pattern Id** | **Measurement Gap Length (MGL, ms)** | **Measurement Gap Repetition Period (MGRP, ms)** |
|---|---|---|
| 0 | 6 | 40 |
| 1 | 6 | 80 |
| 2 | 3 | 40 |
| 3 | 3 | 80 |
| 4 | 6 | 20 |
| 5 | 6 | 160 |
| 6 | 4 | 20 |
| 7 | 4 | 40 |
| 8 | 4 | 80 |
| 9 | 4 | 160 |
| 10 | 3 | 20 |
| 11 | 3 | 160 |
| 12 | 5.5 | 20 |
| 13 | 5.5 | 40 |
| 14 | 5.5 | 80 |
| 15 | 5.5 | 160 |
| 16 | 3.5 | 20 |
| 17 | 3.5 | 40 |
| 18 | 3.5 | 80 |
| 19 | 3.5 | 160 |
| 20 | 1.5 | 20 |
| 21 | 1.5 | 40 |
| 22 | 1.5 | 80 |
| 23 | 1.5 | 160 |
| 24 | 10 | 80 |
| 25 | 20 | 160 |

The UE determines the MG timing based on the gap offset configuration and the MG timing advance configuration provided by higher layer signaling. The gap offset is defined as the offset of the gap pattern. There are about 160 offset values, but all values are not applicable for all periodicities. The offset values point to the starting subframe within the period, its value range is from 0 to MGRP-1. For example, if the periodicity is 20 ms, the offset ranges from 0 to 19. If the MG timing advance (Mgta) is configured, the UE starts the measurement Mgta ms before the gap subframe occurrence i.e., the MG starts at time Mgta ms advanced to the end of the latest subframe occurring immediately before the MG. The amount of timing advance can be 0.25 ms (FR2) or 0.5 ms (FR1).

In NR, an RF re-tuning time is applied. There are various bands below 6 GHz in 4G LTE networks. In NR, frequency range 1 (FR1) overlaps and extends 4G LTE frequencies, including various bands from 450 MHz to 6 000 MHz, which is commonly referred to as NR sub-6 GHz. NR further includes a frequency range 2 (FR2) covering from 24 250 MHz to 52 600 MHz, which is commonly referred to as mm-Wave, even though the millimeter wave frequency may start at 30 GHz strictly speaking. For example, the re-tuning time is 0.5 ms for carrier frequency measurements in the FR1 range and 0.25 ms in the FR2 range. For example, a gap length of 4 ms for FR1 measurements would allow 3 ms for actual measurements and a gap length of 3.5 ms for FR2 measurements would allow 3 ms for actual measurements.

The applicability of the MG patterns is further specified (see e.g. Tables 9.1.2-2 and 9.1.2-2 of Technical Standard 3GPP TS 38.133, e.g. v18.7.0). In particular, NR defines two types of MG, i.e., per-UE and per-FR. The per-UE gap (gapUE) is applied to both FR1 and FR2 frequencies. For the per-FR gap, two independent gap patterns are defined for FR1 (gapFR1) and FR2 (gapFR2). If the gapUE is configured, neither of gapFR1 nor gapFR2 can be configured. The MeasGapConfig IE specifies the MG configuration and controls setup/release of MG by RRC.

Typically, the UE measures reference signals (RS), which are described in more detail below.

The UE can be configured with several MG configurations, possibly with different priority levels (e.g. set by gap priority in the *GapConfig* IE). If two MG occasions collide with each other in the time domain, the UE drops the MG with the lower priority (e.g. as described in section 9.1.8.3 of TS 38.133).

During the MG, the MAC entity is not required to perform the following (see e.g. section 9.1.2 of 3GPP TS 38.133, e.g. v 18.7.0).
- Send HARQ feedback, SR, and CSI
- Report SRS
- Transmit on UL-SCH except for Msg3
- Receive DL-SCH
- Monitor the PDCCH except the UE is waiting for Msg2 or Msg4 during RA procedure.

Such restrictions could introduce additional delay and affect the communication performance.

### Reference Signals

Several different types of reference signals (RS) are used for 5G NR (see 3GPP TS 38.211 v18.4.0 section 7.4.1). These reference signals may be used by the UE to perform measurements during the MG. At least the following reference signals are available in 5G NR:
- CSI-RS, Channel State Information Reference Signal, usable for channel state information acquisition and beam management
- PDSCH DMRS, DeModulation Reference Signal, usable for the PDSCH demodulation
- PDCCH DMRS, DeModulation Reference Signal, usable for the PDCCH demodulation
- PBCH DMRS, DeModulation Reference Signal, usable for the PBCH demodulation
- PTRS, Phase Tracking Reference Signal, usable for phase tracking the PDSCH
- Tracking Reference Signal, usable for time tracking, also called "CSI-RS for tracking" (see TS 38.214 v18.4.0, section 8.4)
- RIM reference signals
- Positioning reference signals

### Measurement gap skipping

As presented above, exemplarily for XR applications, a data stream (e.g., a video stream or an audio stream) may comprise a plurality of media frames, where each of the media frames can be quite large. The data stream traffic can be characterized as quasi-periodic, where each of a plurality of media frames arrives over a jitter time window. The jitter time window during which each of the media frames arrives, is defined by a frame rate of frames per second (fps).

This situation is illustrated in **Fig. 2****.** For ease of illustration and understanding, exemplary assumptions are made as follows. A video stream of 60 fps is assumed, so that a video frame (also called a media frame) is generated every 1/60 s, which is approximately 16.6667 ms. The video frames are generated with a jitter time window of 8 ms.

As discussed above, the UE is configured with measurement gaps. For ease of illustration and understanding, exemplary assumptions are made as follows. A measurement gap is configured with a periodicity of 40 ms, a measurement gap length of 1.5 ms and an RF re-tuning time of 0.5 ms before and after the measurement gap, resulting in a duration of each MG of 2.5 ms.

As exemplary illustrated in **Fig. 2** for frame 3, due to the difference between the periodicities of the video stream and the configured MG pattern, a measurement gap included in the configured MG pattern might collide with the XR traffic, which imposes a delay before the data can be scheduled. This causes an additional delay in the delivery of the video frame. A similar limitation applies to uplink (UL) data transmissions. In addition, the delay can be increased when DRX functionality is enabled.

To address this issue, 3GPP considered enhancements in Rel. 19 to enable the identified enhancements with RRM performance impact taken into consideration, by specifying corresponding measurement gaps and scheduling restrictions. In this respect, it was agreed to consider solutions for skipping measurement gaps so as to enable UEs to transmit or receive data during the skipped measurement gaps, e.g. caused by RRM measurements, based on a dynamic indication received by the UE.

Such an indication, for example, may be used by the network to explicitly and dynamically indicate a UE to skip a measurement gap. In one example, the indication can be part of a downlink control information (DCI) message, e.g. of DCI formats 0_1/1_1 and 0_2/1_2, and also 0_3/1_3. For example, it is considered that one bit of the scheduling DCI is used to indicate the UE whether to skip the first measurement gap (restriction), which is configured after a minimum time offset required as processing time between the last symbol of the PDCCH carrying the DCI and the start of the corresponding measurement gap (which is indicated by the DCI). One bit value (e.g. "1") will be considered to indicate that a MG (to be determined) should be skipped, while the other bit value (e.g. "0") will be considered to indicate that MG should not be skipped.

### Further Improvements

Accordingly, in a possible implementation scenario, a UE may receive a DCI message, which carries a single bit, as an indication to skip a measurement gap. As a first MG skipping rule, the UE may then determine that the indication in the DCI may point to the earliest MG occasion for the UE, which is configured any time after the reception of the DCI message. The first MG skipping rule may further consider a minimum processing time gap, also called minimum time offset (or simply time offset, TO). The required Minimum TO is considered to be between the end of the received skipping indication and the start of the corresponding measurement gap occasion that is going to be skipped. For example, the minimum time offset could be set under consideration of the processing time that the UE requires for processing the skipping indication. A MG skipping indication received during the TO of a MG, does not indicate said MG.

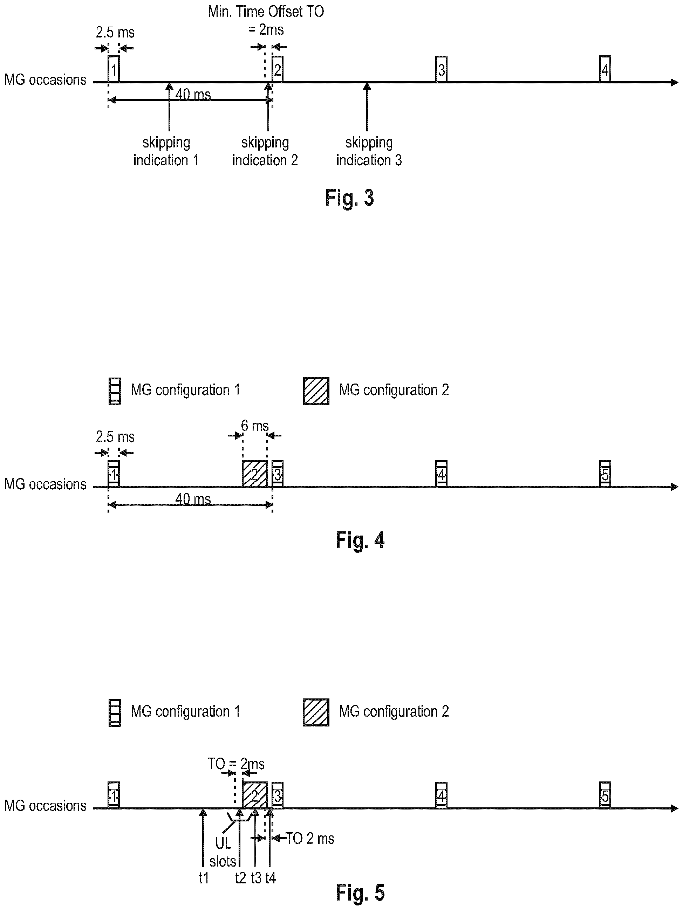

**Fig. 3** schematically and exemplarily illustrates an application scenario, where the first MG skipping rule is applied. In the illustrated example, the MG occasions are configured with a measurement gap length of 2.5 ms and a measurement gap periodicity of 40 ms. Here, four measurement gap occasions MG 1, MG 2, MG 3 and MG 4 are shown. Further, it is exemplarily assumed that the processing time gap (minimum time offset), which allows the UE to process the measurement gap skipping indication before its application, is set to 2 ms. To determine, which of the measurement gap occasions is to be skipped, the UE (and the gNB) apply the same above described first MG skipping rule, i.e. the UE (and the gNB) determine that the skipping indication (e.g. within a DCI) points to the earliest MG occasion for the UE, which is configured any time after the reception of the skipping indication, further under consideration of the minimum time offset. That means that a MG skipping indication 1, which is received before the start of the minimum time offset ahead of MG 2, instructs the UE to skip MG 2, which is the subsequent MG occasion. Correspondingly, a MG skipping indication 2 2, which is received before the start of MG 2, but after the start of the minimum time offset of MG 2, instructs the UE to skip MG 3, which in that case is considered to be the subsequent MG occasion. Furthermore, a MG skipping indication 3, which is received before the start of the minimum time offset of MG 3, instructs the UE to skip MG 3, which is the subsequent MG occasion.

However, the inventors have identified problems, which may occur when applying the above described MG skipping behaviour for determining the skipping of configured measurement gaps. For example, in a case that a skipping indication is received although the UE has not configured measurement gaps or the next configured measurement gap starts a long time, e.g. 150 ms, after the skipping indication is received, the UE might need to store the received MG skipping indication and apply it after a long time. At the later time, when the MG skipping indication is applied, skipping the MG occasion may however not be required anymore. Accordingly, the application of the first MG skipping rule may complicate the processing in the UE and the base station.

Another problem with the above-described MG skipping behaviour may occur in scenarios, in which the UE is configured to apply two or more separate MG configurations. When configuring two or more MG configurations, it may be the case that two MG occasions occur shortly one after another, more specifically where the preceding MG occasion of one MG configuration overlaps the minimum time offset of the subsequent MG occasion of another MG configuration. Such a problematic scenario is exemplarily illustrated in **Fig. 4 and 5****.** In detail, MG occasions are configured according to a first MG configuration (MG configuration 1) with a measurement gap length of 2.5 ms and a measurement gap periodicity of 40 ms and according to a second MG configuration (MG configuration 2) with a measurement gap length of 6 ms and a larger (non specified) measurement gap periodicity. The minimum time offset (TO) before the start of each MG occasion is 2 ms, e.g., a skipping indication received earlier than 2ms ahead of a MG occasion refers to said MG occasion.

Fig. 4 illustrates the two MG configurations 1 and 2 and their respective MG lengths and periodicities. Fig. 5 on the other hand additionally illustrates the minimum time offset (TO) to be taken into account when determining to which MG occasion a skipping indication refers.

As further apparent from Fig.5, the MG configuration 2 happens to be configured in such a manner that a MG occasion (here MG 2) of MG configuration 2 overlaps with the minimum time offset associated with MG 3 of MG configuration 1.

The inventors have identified that the single-bit skipping indication has limitations when having to differentiate indicating two MG occasions from different MG configurations.

In the problematic scenario illustrated in Fig. 5, the gNB may only have a very small time window or even may not be able at all to send a skipping indication for only MG occasion 3. For instance, at a time before the TO starts for MG occasion 2, such as time instance t1, a skipping indication would be considered to refer to MG occasion 2. During the small time window after the TO starts for MG occasion 2 and before the start of MG occasion 2, including e.g. time instance t2, a skipping indication would indeed refer to MG occasion 3. However, said time window and t2 might not be available, because there is no DL slot (but UL slots). At a time during MG occasion 2, e.g. at time instance t3, the UE would not be monitoring the PDCCH for receiving a skipping indication. And, a time after the MG occasion 2 but before MG occasion 3, such as at time instance t4, is already after the TO starts for MG occasion 3, such that any skipping indication transmitted would be considered to refer not to MG occasion 3 but to another subsequent MG occasion 4.

Overall, it is difficult or even not possible to transmit a skipping indication that would instruct the UE to skip only MG occasion 3.

One solution could be to send a first skipping indication, e.g. at time instance t1, to skip MG occasion 2, and then to send another skipping indication e.g. at time instance t3 to skip MG occasion 3. However, such a solution would also be detrimental, because it involves additional overhead for transmitting the first skipping indication and results in the skipping of MG occasion 2 (which in turn may negatively affect the measurement performance at the UE).

The inventors have therefore identified the possibility of providing an improved measurement gap skipping procedure and parts thereof, which facilitate meeting the above needs and avoiding one or more of the disadvantages described above. The present invention relates to various solutions and variants for such improved measurement gap skipping procedure, and especially an improved procedure for determining the measurement gaps, to which a MG skipping indication is applied.

### Solutions

In the following, communication devices, such as UEs, base stations (e.g. distributed unit and central unit thereof), integrated circuits and respective procedures to meet these needs will be described for the new radio access technology envisioned for the 5G mobile communication systems, but which may also be used in previous LTE-based mobile communication systems or future (e.g. 6G) mobile communication systems. In particular, while 3GPP is currently developing Rel. 19 of the 5G (-Advanced) mobile communication system, 3GPP has already started planning for the next generation, 6G, of communications systems.

Different implementations and variants of the improved MG skipping procedure will be explained. The following disclosure was facilitated by the discussions and findings as described above and may for example be based at least on part thereof.

In general, it should be noted that many assumptions have been and are made herein so as to be able to explain the principles underlying the present disclosure in a clear, concise and understandable manner. These assumptions are however to be understood merely as examples made herein for illustration purposes, which are not necessarily essential for the invention and should thus not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to terminology used in the current 3GPP 5G standardization (possibly also used before in LTE/LTE-A systems), even though specific terminology to be used in the context of the new radio access technology for the next communication systems (e.g. 6G) may not be fully decided yet or might finally change. Thus, terms could be changed in the future, without affecting the functioning of the respective features and solutions. Consequently, a skilled person is aware that the solutions and their scope of protection should not be restricted to particular terms exemplarily used herein for lack of newer or finally agreed terminology, but should be more broadly understood in terms of functions and concepts that underlie the solutions explained in the present disclosure.

For instance, a mobile station or mobile node or user terminal or user equipment (UE) or communication apparatus or communication device is a physical entity (physical node) within a communication network. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

The term "base station" or "radio base station" here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB. Moreover, the base station may also be a gNB in a Non-Terrestrial Network (NTN) NR system.

The base station can be implemented exemplarily in a split architecture (see Fig. 3), according to which a gNB can be split into a gNB-CU (Central Unit) providing support for the higher layers (e.g. RRC) and one or more gNB-DUs (Distributed Units) providing support for the lower layers (e.g. MAC, PHY).

Communication between the UE and the base station is typically standardized and may be defined by different layers, such as PHY, MAC, RRC etc. (see above background discussion).

As used herein, the term **"measurement gap"** or **"MG"** may exemplarily refer to a time domain opportunity provided for the UE to perform measurements on, for example, reference signals. The network may configure a UE with a plurality of MGs, e.g. via RRC signaling, for instance in the manner of configuring a MG pattern. The network may beneficially configure these MGs so that they do not coincide with UE transmissions or receptions. A UE may be configured with multiple MG configurations, each MG configuration in turn defining a plurality of MG occasions.

The term **"measurement gap skipping indication"** or **"skipping indication"** refers to MG skipping information, which is transmitted from a base station to a UE, for allowing the UE to determine at least one measurement gap, which can be skipped by the UE according to the transmitted information. During the skipped measurement gap(s), the UE can transmit and/or receive data instead of performing measurements. The MG skipping indication may be transmitted by the gNB (and received by the UE) for example, in a downlink control information (DCI) message. In particular, the MG skipping indication may be conveyed by a single bit. Other possible terms could be used instead of the terms "indication" and "indicate", such as **"instruction"** and **"instruct".**

The term **"skipping"** can be understood, for example, as the act of not taking advantage of an opportunity. In other words, if the UE skips a measurement gap (or an opportunity to perform measurements during a measurement gap), the UE does not use a measurement gap (or measurement gap occasion) determined from the MG configuration to perform measurements in a target carrier. But the UE may have instead the possibility of performing another operation such as transmitting or receiving data in the serving cell during said skipped MG. Other possible terms could be used instead of the term "skipping", such as **"dropping", "omitting",** or **"leaving out".**

The term **"overlap"** as used here can be understood as an overlap in time or as a collision in time. Two scheduled events, e.g. the MG and the MG skipping time period or at least two measurement gaps or at least two MG skipping time periods, overlap in time if two or more activities are scheduled to take place simultaneously or in partially overlapping time periods. Especially, two scheduled events overlap in time if two or more activities are scheduled to take place in a same time resource unit or in partially overlapping time periods. Other possible terms could be used for the term "overlap", such as **"collide", "coincide",** or **"intersect".**

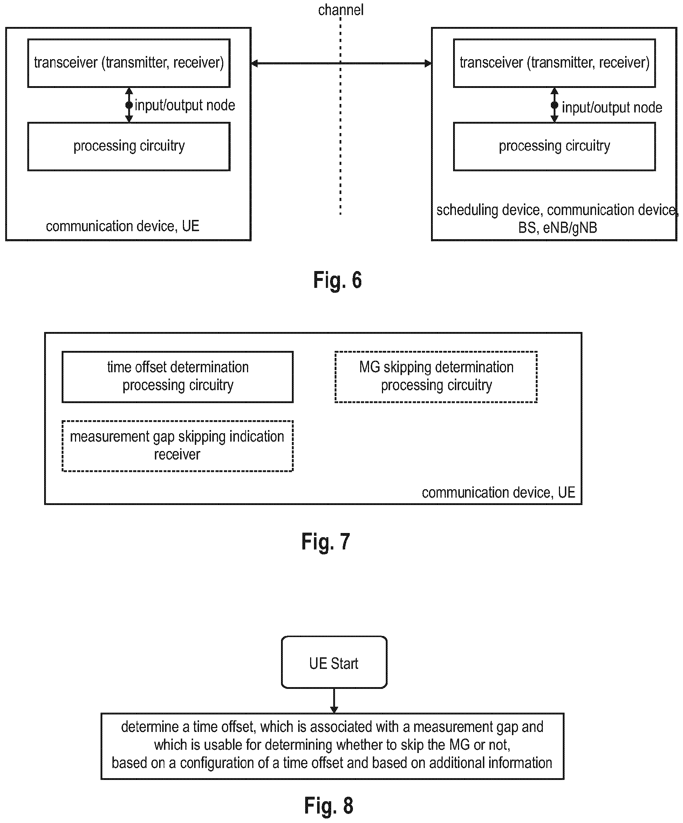

**Fig. 6** illustrates a general, simplified and exemplary block diagram of a user equipment (also termed communication device) and a scheduling device (here exemplarily assumed to be located in the base station, e.g., the LTE eNB (alternatively termed ng-eNB) or the gNB in 5G NR). The UE and eNB/gNB are communicating with each other over a (wireless) physical channel respectively using the transceiver.

The communication device may comprise a transceiver and processing circuitry. The transceiver in turn may comprise and/or function as a receiver and a transmitter. The processing circuitry (can also be termed circuitry) may be one or more pieces of hardware such as one or more processors or any LSIs. Between the transceiver and the processing circuitry there is an input/output point (or node) over which the processing circuitry, when in operation, can control the transceiver, i.e., control the receiver and/or the transmitter and exchange reception/transmission data. The transceiver, as the transmitter and receiver, may include the RF (radio frequency) front including one or more antennas, amplifiers, RF modulators/demodulators and the like. The processing circuitry may implement control tasks such as controlling the transceiver to transmit user data and control data provided by the processing circuitry and/or receive user data and control data, which is further processed by the processing circuitry. The processing circuitry may also be responsible for performing other processes such as determining, deciding, calculating, measuring, etc. The transmitter may be responsible for performing the process of transmitting and other processes related thereto. In one example, the receiver may be responsible for performing the process of receiving and other processes related thereto, such as monitoring a channel.

The present disclosure relates to different solutions (and respective variants) of an improved MG skipping procedure. Improved communication devices (such as UEs), improved base stations and improved integrated circuits are presented in connection therewith, which participate separately or together in the improved MG skipping procedures. In the following, although a UE is used for the description as an example for the communication device, the description is equally applicable to a communication device. Corresponding methods for the communication device behavior and the base station behavior are provided as well. The integrated circuits may correspond to the UE and base station, and respectively their behavior.

**Fig. 7** illustrates a simplified and exemplary communication device structure according to a basic implementation of the improved MG skipping procedure presented in more detail below. In one example, the device structure can be implemented based on the general device structure explained in connection with Fig. 6. The various structural elements of the communication device illustrated in said Fig. 7 can be interconnected between one another e.g., with corresponding input/output nodes (not shown) e.g., in order to exchange control and user data and other signals. Although not shown for illustration purposes, the communication device may include further structural elements.

As apparent from Fig. 7, the UE may include a time offset determination processing circuitry, and optionally may further include a measurement gap skipping indication receiver and a MG skipping determination processing circuitry.

The processing circuitry of the general UE structure of Fig. 6 can be implemented as the above time offset determination processing circuitry and MG skipping determination processing circuitry of Fig. 7, and can also perform further functions as will be become apparent from below. The transceiver of Fig. 6 can be implemented as the above measurement gap skipping indication receiver and further function and assist the above circuitry, and can also perform further functions as will become apparent from below.

One exemplary procedure is implemented by a communication device that includes the following. The communication device includes a processing circuitry, which determines a time offset, which is associated with a measurement gap, MG, and is usable for determining whether to skip the MG or not. Determining the time offset is based on a configuration of a time offset, which defines an initial time offset, and based on additional information.

A corresponding exemplary method comprises the following steps performed by a communication device:
determining a time offset, which is associated with a measurement gap, MG, and is usable for determining whether to skip the MG or not,
wherein determining the time offset is based on a configuration of a time offset, which defines an initial time offset, and based on additional information

A corresponding sequence diagram for an exemplary UE behaviour in line with the above-discussed UE and UE method is presented in Fig. 8.

The above-described improved MG skipping procedure at the UE facilitates achieving the objective and overcoming at least some of the drawbacks explained above. According to the above solution, the determination of the time offset used for skipping a MG is flexible and adaptive, because it is determined based on additional information. The network entity which transmits the MG skipping indication (e.g. the base station, gNB) has more flexibility on instructing the UE to skip a MG, making use of this additional information. According to one example, the time offset can be determined so as to be sufficiently long for indicating the skipping of an individual MG.

Depending on the type of additional information, further advantages are connected to the improved MG skipping procedure, as will become apparent from below.

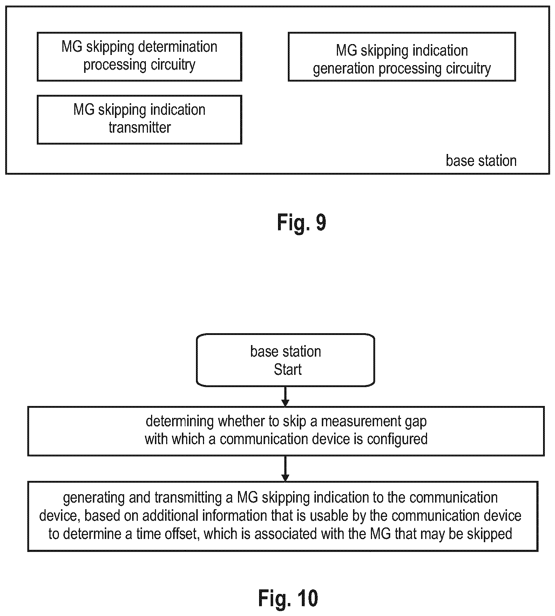

**Fig. 9** illustrates a simplified and exemplary base station structure according to an exemplary implementation of the improved MG skipping procedure, which can be implemented based on the general base station structure explained in connection with Fig. 6. The various structural elements of the base station illustrated in said Fig. 9 can be interconnected between one another e.g., with corresponding input/output nodes (not shown) e.g., in order to exchange control and user data and other signals. Although not shown for illustration purposes, the base station may include further structural elements.

As apparent therefrom, the base station comprises a MG skipping determination processing circuitry, a MG skipping indication generation processing circuitry, and a MG skipping indication transmitter.

The processing circuitry of the general base station structure of Fig. 6 can be implemented as the above MG skipping determination processing circuitry and a MG skipping indication generation processing circuitry of Fig. 9, and can also perform further functions as will be become apparent from below. The transceiver of Fig. 6 can function as the above a MG skipping indication transmitter of Fig. 9, and can also perform further functions as will become apparent from below.

One exemplary procedure is implemented by a base station that includes the following. Processing circuitry of the base station determines whether to skip a measurement gap, MG, with which a communication device is configured. The processing circuitry and a transceiver of the base station generate and transmit a MG skipping indication to the communication device, indicating to skip the determined MG. The MG skipping indication is generated and transmitted to the communication device based on additional information. The additional information being usable by the communication device to determine a time offset, which is associated with the MG that may be skipped.

A corresponding exemplary method comprises the following steps performed by a base station:
determining whether to skip a measurement gap, MG, with which a communication device is configured,
generating and transmitting a MG skipping indication to the communication device, indicating to skip the determined MG, and
wherein the MG skipping indication is generated and transmitted to the communication device based on additional information, the additional information being usable by the communication device to determine a time offset, which is associated with the MG that may be skipped.

A corresponding sequence diagram for an exemplary base station behaviour in line with the above-discussed base station and base station method is presented in **Fig. 10****.**

The above-described improved MG skipping procedure at the base station facilitates achieving the objective and overcoming at least some of the drawbacks explained above. As already explained in connection with the improved UE/communication device, the determination of the time offset used for skipping a MG is flexible and adaptive, because it is determined based on additional information. The base station (as the network entity which transmits the MG skipping indication) has more flexibility on instructing the UE to skip a MG, making use of this additional information.

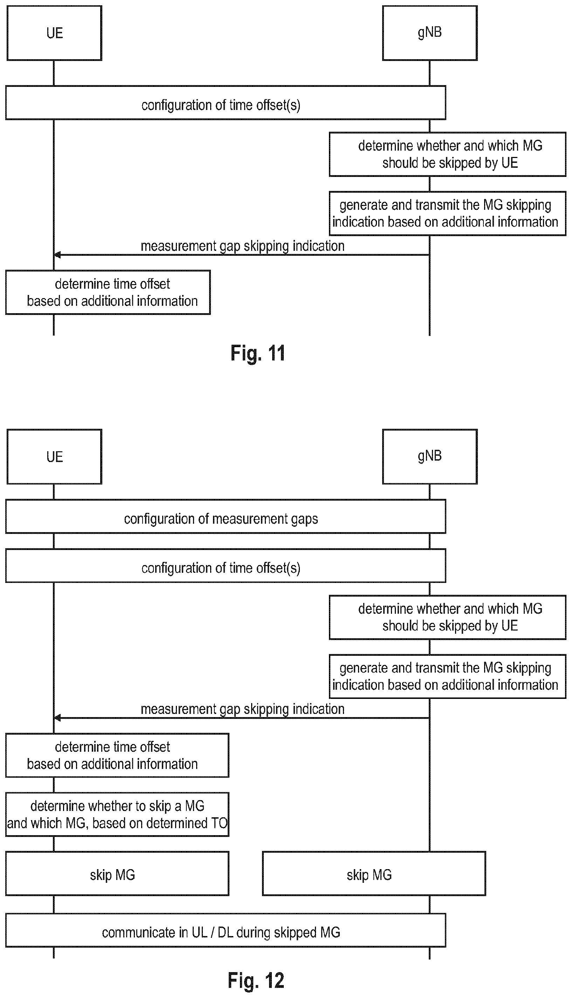

**Fig. 11** is a signaling diagram of an exemplary and simplified implementation of the improved MG skipping procedure, illustrating the exchange of messages between the different participating entities (here the UE and the gNBs) and the steps performed at these entities. The UE behaviour and gNB behaviour follow the above-described UE and base station and the respective methods.

As apparent from Fig. 11, it is exemplarily assumed herein that the UE is configured with one or more time offsets (TOs) to be used for the improved MG skipping operation. Here, the gNB is the network entity responsible for providing the TO configuration to the UE.

The gNB is also responsible for transmitting the MG skipping indication to the UE. The UE in turn determines the time offset at least based on the additional information, optionally (depending on the implementation of a solution) also taking into account the previous TO configuration (e.g. an initial time offset).

As further apparent from Fig. 11, in one example implementation, the gNB determines whether any MG should be skipped and if so which MG should be skipped by the UE. Depending on the result, the gNB then transmits a suitable MG skipping indication to the UE for instructing the UE to skip a MG. In order to facilitate that the UE skips the correct MG, the gNB generates and transmits the MG skipping indication, based on the additional information (same additional information as used by the UE to determine the TO). Thus, the MG skipping indication is transmitted by the gNB in a suitable manner and at a suitable timing (details on particular implementations will be presented further below).

The UE in turn receives the MG skipping indication, and then proceeds to determine the time offset, as mentioned above, e.g. based on the additional information also taken into account by the gNB for generating and transmitting the MG skipping indication.

As a result, the UE and gNB should have if possible a common understanding of which MGs are skipped and which MGs are not skipped, so as to thereby improve communication between them and allow the UE to have MG to perform measurements if necessary.

The solution according to Fig. 11 has the advantage that the determination of the time offset used for skipping a MG is flexible and adaptive, because it is determined based on additional information.

**Fig. 12** is another signaling diagram of an exemplary and simplified implementation of the improved MG skipping procedure. Further to the implementation explained above with respect to Fig. 11, the implementation according to Fig. 12 exemplarily reflects that the gNB has also configured the UE with measurement gaps to give the UE opportunities to perform measurements on target carriers or cells as needed. Although the MG configuration is illustrated in Fig. 12 as occurring before the TO configuration, the solutions are not limited to such an order, and it is also possible that the MG configuration occurs after or at the same time as / together with the TO configuration.

Moreover, the implementation according to Fig. 12 exemplarily also reflects a possible UE and gNB behaviour after the UE determines the corresponding time offset for one or more MGs. In more detail, the determined time offset(s) are used for determining whether to skip a MG and also which MG is to be skipped.

In one example, the UE determines whether to skip a MG based on the determined time offset and a reception timing of the received MG skipping indication relative to the MG. The time offset is between a measurement gap skipping indication, which indicates to skip at least one measurement gap, and a measurement gap, MG, that may be skipped.

After determining whether and which MG should be skipped, the UE then actually skips the thus determined MG accordingly.

On the gNB side, the gNB had already determined whether and which MG should be skipped and had sent the MG skipping indication accordingly to the UE. Thus, the gNB skips (or at least should) skip the same MG as determined by the UE.

Both communication partners, the UE and the gNB, have skipped the same MG, and may or may not use the skipped MG for a different purpose, e.g. to communicate in the uplink and/or downlink during said skipped MG.

The above described determining of whether and which MG to skip can be performed repeatedly, for each incoming MG skipping indication.

In the following, different solutions according to the improved MG skipping procedure will be presented. In brief, according to the First Solution, the determination of the time offset is additionally based on a guard time duration (as an implementation of the additional information) that is configured for a particular MG. According to the Second Solution, the determination of the time offset is additionally based on a characteristic of the MG configuration (as an implementation of the additional information). According to the Third Solution, the determination of the time offset is additionally based on a characteristic of the DCI carrying the MG skipping indication (as an implementation of the additional information). According to a Fourth Solution, the determination of the time offset is additionally based on a cell or carrier, to which the MG skipping indication refers (as an implementation of the additional information).

### First Solution

According to the First Solution, the determination of the time offset is additionally based on a guard time duration that is configured for a particular MG. Correspondingly, information on the guard time duration corresponds to the additional information mentioned above e.g. in connection with Fig. 8.

Other expressions instead of the "guard time duration" are also possible, such as "minimum time duration" or "time duration" or "guard time", "guard time period", "guard period", "guard time interval", "guard interval" etc.

In one example, the guard time duration can be additionally configured for a MG configuration, such that the guard time duration is applied to each MG of said MG configuration.

The guard time duration is configured for use in connection with the MG skipping operation. One purpose of the guard time duration is to protect the MGs of a particular MG configuration from other interfering MGs of other MG configurations, so as to facilitate that a MG skipping indication refers to a MG of said particular MG configuration rather than to another MG of another MG configuration. Put differently, the guard time duration prevents other MGs that occur during the guard time duration to be skipped.

The time position of the guard time duration is directly ahead of the MGs of said particular MG configuration.

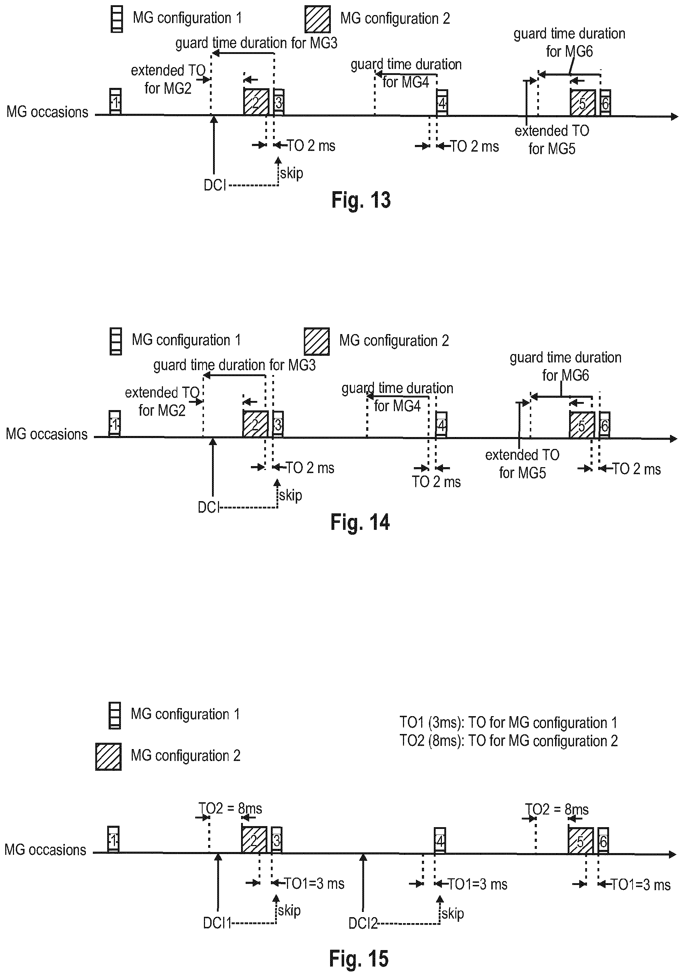

In one example, the guard time duration respectively starts before and ends with the start of the MGs of said MG configuration (see Fig. 13 below). In another example, the guard time duration also respectively starts before but ends with the start of the TO of the MGs of said MG configuration (see Fig. 14 below).

In either case, a MG skipping indication that is received during the guard time duration of a particular MG shall preferably be considered to refer to said particular MG, rather than to another MG of another MG configuration.

For instance, this can be considered to be a further second MG skipping rule that may be applied by UEs and network entities, in addition to the first MG skipping rule discussed above (first skipping rule: the MG skipping indication refers to the earliest MG occasion, configured any time after reception of the MG skipping indication).

One exception of the second MG skipping rule is if the MG skipping indication is received during the TO of the particular MG, in which case the MG skipping indication does not indicate the particular MG.

One example implementation of the First Solution comprises the following adjustment (extension) of the TOs of other MGs that occur during the guard time duration. A start of an initially configured time offset for another MG, which occurs during the guard time duration of the particular MG and which starts later than the start of the guard time duration, is extended (e.g. made longer) to a start of the guard time duration.

In more detail, the First Solution changes the TO determination for other MGs that are not configured with a guard time duration. It is assumed that the MGs of MG configurations that are not configured with a guard time duration have a TO configured (with an initial TO value). If such a first MG occurs during the guard time duration of another subsequent MG, the TO of the first MG is extended such that said first MG is no longer considered to be indicated by a MG skipping indication received before. In one example, the TO of the first MG is adjusted to at least meet the guard time duration, e.g. the adjusted TO is extended to at least start as early as the time the guard time duration of the subsequent MG starts.

As a result, the time offset of the first MG is increased to match the guard time duration, thereby providing more time for sending a MG skipping indication destined to the subsequent MG configured with the guard time duration.

**Fig. 13** illustrates an exemplary implementation of the First Solution of the improved MG skipping procedure. It is exemplarily assumed that the UE is configured with two MG configurations, wherein MG configuration 1 configures a pattern of repeating MGs with a length of 2.5 ms and a periodicity of 40 ms. The MG configuration 2 on the other hand configures a pattern of repeating MGs with a length of 6 ms and a periodicity of 80 ms. The two MG configurations are configured such that in at least one instance, two MGs occur close together in time. In the example of Fig. 13, every MG of MG configuration 2 is immediately ahead of every second MG of MG configuration 1 (see MG 2 of MG configuration 2 being immediately ahead of MG 3 of MG configuration 1; similarly MG 5 and MG 6).

Further exemplary, the MG skipping indication is carried in a DCI.

Moreover, it is exemplarily assumed that a TO is configured, applicable to both MG configurations 1 and 2, here for instance with a length of 2ms.

According to the First Solution, it is further exemplarily assumed that the MGs of MG configuration 1 are configured with a guard time duration, of e.g. 15 ms (exemplarily starting 15 ms ahead of the MGs of MG configuration 1 and ending with the start of the MGs). On the other hand, although equally possible, the MGs of MG configuration 2 are not configured with a guard time duration.

As presented generally above, one result of the guard time duration is that the associated MGs are protected from other interfering MGs of other MG configurations, here MGs of MG configuration 2, e.g. MG 2 interfering with MG 3 and MG 5 interfering with MG 6. Fig.13 illustrates the guard time duration for MG 3 of MG configuration 1, illustrates that another MG (in this example MG 2 of MG configuration 2) occurs within the guard time duration of MG3.

Furthermore, in the implementation of Fig. 13 it is exemplarily assumed that the TO of other MGs, without guard time duration, is adjusted to match the guard time duration, as explained above. Correspondingly, the TO of MG 2, which occurs during the guard time duration, is extended to start earlier, namely with the start of the guard time duration. This applies correspondingly to MG 5.

A DCI carrying a MG skipping indication is received during the guard time duration of MG 3. According to the present First Solution, the MG skipping indication in the DCI indicates MG 3 to be skipped and not MG 2, because the MG skipping indication is received during the guard time duration of MG 3. For instance, the MG skipping indication is received during the extended TO of MG 2, which thus is determined to not be indicated by the MG skipping indication.

For sake of information, without configuring the guard time duration for MGs of MG configuration 1, the DCI as illustrated in Fig. 13 would indicate MG 2 as the MG to be skipped, according to the first skipping rule.

If the MG skipping indication is not transmitted by the gNB during the guard time duration but before the guard time duration (not illustrated in Fig. 13), then the normal MG skipping operation can be applied, e.g. involving the first MG skipping rule. In the scenario of Fig. 13 this would result in that the MG 2 would be skipped, because it is the earliest MG occasion, configured any time after reception of the MG skipping indication.

Consequently, according to the First Solution, the gNB can individually instruct to skip either MG 2 or MG 3; to skip only MG 2, the MG skipping indication is sent before the guard time duration of MG 3; to skip only MG 3, the MG skipping indication is sent during the guard time duration (but before the TO of MG 3).

**Fig. 14** illustrates another exemplary implementation of the First Solution of the improved MG skipping procedure, which is very similar to the implementation of Fig. 13. One difference is that the guard time duration does not end with the start of the MG but with the start of the TO of the MG. In this example of Fig. 14, the guard time duration is still considered to be 15 ms. However, the length of the guard time duration could have been configured to be 13 ms, such that the resulting start of the guard time duration would be again 15 ms before the MG, same as in Fig. 13. The remaining principles explained in connection with Fig. 13 equally apply to the implementation of Fig. 14 and will not be repeated.

The First Solution thus allows the gNB more time or even the possibility to transmit a MG skipping indication for only skipping a single MG (here MG 3), even in cases where another MG (here MG 2) occurs just before and interferes with said single MG (MG 3).

The First Solution is particularly useful when the UE is configured with multiple MG configurations, and particularly in a manner where MGs of one MG configuration may occur just before other MGs of another MG configuration (compare MG 2 and MG 3 above in Fig. 13 and 14).

Further Variants of the First Solution relate to how the guard time duration is configured.

In one variant, the guard time duration is determined by the UE based on a configuration message received from a network entity. Correspondingly, the network entity, such as the gNB, is responsible for configuring the guard time duration and transmits a corresponding message to the UE, e.g. using the RRC protocol.

The gNB may decide for which MG configuration a guard time duration should be configured (also decide on its length) and for which MG configuration no guard time duration should be configured. In one example, the gNB is also responsible for configuring the MG configurations and might thus be aware of the problematic scenario that may occur, as discussed above, where MGs of a first MG configuration may occur just before other MGs of another second MG configuration. In order to facilitate skipping MGs of the second MG configuration also in such problematic scenarios, the gNB might decide to additionally configure the guard time duration for said second MG configuration. In brief, MGs appearing shortly after other MGs could benefit from being configured with a guard time.

Furthermore, the gNB can exemplarily consider the MG configurations, periodicity, duration, and also slot configurations, and then derive the proper guard time duration for the configurations so as to ensure the possibility to send DCI with a MG skipping indication in time.

The guard time duration is a period of time and could be defined in units of time, such as ms, symbols, slots or frames,

As an alternative, the guard time duration is not directly defined in a unit of time, but is determined differently namely such that the determined guard time duration covers a number of slots, or a number of downlink slots, or a number of occasions for receiving a MG skipping indication (e.g. DCI occasions in a PDCCH search space). Correspondingly, the UE would determine an actual length of the guard time duration on that basis. By indirectly indicating the number of downlink slots or number of receiving occasions of a MG skipping indication, the chances that the gNB can successfully indicate the skipping for said MG are increased.

### Second Solution

According to the Second Solution, the determination of the time offset is additionally based on a characteristic of the MG configuration. Correspondingly, information on the characteristic of the MG configuration corresponds to the additional information mentioned above e.g. in connection with Fig. 8.

The UE can be configured with one or a plurality of different MG configurations, respectively defining a pattern of repeating MGs. The MG configurations have further a particular characteristic, which will be used as part of the Second Solution to differentiate between different time offsets.

The Second Solution allows to configure a plurality of different time offsets, for instance different lengths of a time offset, depending on a characteristic of the MG configuration. Correspondingly, the time offset to be used for MGs of a particular MG configuration is determined based on said characteristic of the particular MG configuration. This facilitates configuring different time offsets for different MG configurations, thereby introducing adaptive time offsets and increasing the flexibility of the MG skipping procedure.

The Second Solution can use different characteristic of the MG configuration procedure.

Exemplarily, two different characteristics among various that are possible will be presented as two variants of the Second Solution. In the First Variant, the MG configuration characteristic is an index of the MG configuration, the index being information that allows differentiating between different MG configurations and as a result between different time offsets.

In the second variant, a priority of the MG configuration is considered as the MG configuration characteristic for distinguishing between different time offsets.

Furthermore, a third variant is based a combination of the index and the priority of the MG configurations, which thus could be used as a combined characteristic, thereby allowing more detailed differentiation of the time offsets.

The First Variant of the Second Solution will be explained now. For instance, a plurality of MG configurations can be configured for the UE, respectively having a different MG configuration index, e.g. three MG configurations with indexes 1, 2 and 3. Each MG configuration is associated with one time offset, TO1, TO2, and TO3. The value of the plural time offsets could be different from one another, but some or all of the time offsets could also have the same value.

When determining the time offset of a particular MG, that time offset among the plurality is selected, which is associated with the MG configuration that configures said particular MG. Consequently, MGs of the same MG configuration will have the same time offset, but could be different compared to MGs of other MG configuration(s).

**Fig. 15** illustrates an exemplary implementation of the First Variant of the Second Solution of the improved MG skipping procedure, wherein the MG configuration index is used as the relevant characteristic for differentiating between various TO offsets.

Similar assumptions are made for the implementation of Fig. 15, as already done for Fig. 13 of the First Solution. For instance, it is exemplarily assumed that the UE is configured with two MG configurations, wherein MG configuration 1 configures a pattern of repeating MGs with a length of 2,5 ms and a periodicity of 40 ms. The MG configuration 2 configures a pattern of repeating MGs with a length of 6 ms and a periodicity of 80 ms. The two MG configurations are configured such that in at least one instance, two MGs occur close together in time, here e.g. MG 2 of MG configuration 2 being immediately ahead of MG 3 of MG configuration 1 (similarly MG 5 and MG 6). Further exemplary, the MG skipping indication is carried in a DCI.

Moreover, in accordance with the First Variant of the present Second Solution, it is exemplarily assumed that a first time offset TO1 is configured for MG configuration 1, e.g. having a length of 3 ms. A second time offset TO2 is configured for MG configuration 2, e.g. having a length of 8 ms. As a result, any MG of MG configuration 1 will be considered as a possible MG skipping target based on a TO1 of 3 ms. Any MG of MG configuration 2 will be considered as possible MG skipping target based on a TO2 of 8 ms.

In the example illustrated in Fig. 15, MG 1, MG 3, MG 4 and MG 6 of the MG configuration 1 have a TO1 of 3 ms. MG 2 and MG 5 of MG configuration 2 have a TO2 of 8 ms.

The time offsets are considered as usual in the MG skipping operation, e.g. according to the first MG skipping rule. This will be illustrated in Fig. 15 with respect to DCI1 and DCI2, respectively carrying a MG skipping indication.

The MG skipping indication of DCI1 is received within the time offset TO2 of MG 2 and before the time offset TO1 of MG 3. Thus, the MG skipping indication of DCI1 is determined to indicate to skip the MG 3, rather than MG 2. Transmitting the DCI1 before the time offset TO2 of MG 2 (not illustrated) would have resulted in that the MG 2 is skipped.

On the other hand, the MG skipping indication of DCI 2 is received ahead of the time offset TO1 of MG 4, and no other MG is in between. Thus, the MG skipping indication of DCI2 is determined to indicate to skip MG 4.

The gNB may decide how to set the length of the time offsets for which MG configuration, e.g. defining relatively long or short time offsets.

In one example, the gNB is also responsible for configuring the MG configurations and might thus be aware of the problematic scenario that may occur, as discussed above, where MGs of a first MG configuration may occur just before other MGs of another second MG configuration. In order to facilitate skipping MGs of the second MG configuration also in such problematic scenarios, the gNB might decide to set a relatively long time offset for the first MG configuration, thereby providing more time for sending a MG skipping indication that is considered to indicate the MG of the second MG configuration.

Furthermore, the gNB can exemplarily consider the MG configurations, periodicity, duration, and also slot configurations, and then derive the proper time offset for the configurations so as to ensure the possibility to send DCI with a MG skipping indication in time.

The Second Variant of the Second Solution will be explained now. For instance, a plurality of MG configurations can be configured for the UE, wherein each MG configuration is associated with a priority. For example, a priority concept for MG configurations was already mentioned above, intended to deal with collisions of MGs from different MG configurations, and in one example could be reused for the Second Variant of the Second Solution. Each possible priority is associated with one time offset, e.g. priority 1 associated with time offset TO1, priority 2 associated with time offset TO2, etc. The value of the plural time offsets TO1, TO2, etc. could be different from one another, but some or all of the time offsets could also have the same value.

When determining the time offset of a particular MG, that time offset among the plurality is selected, which is associated with the priority of the MG configuration that configures the particular MG. Consequently, MGs of MG configurations with the same priority will have the same time offset, but could be different compared to MGs of other MG configuration with a different priority.

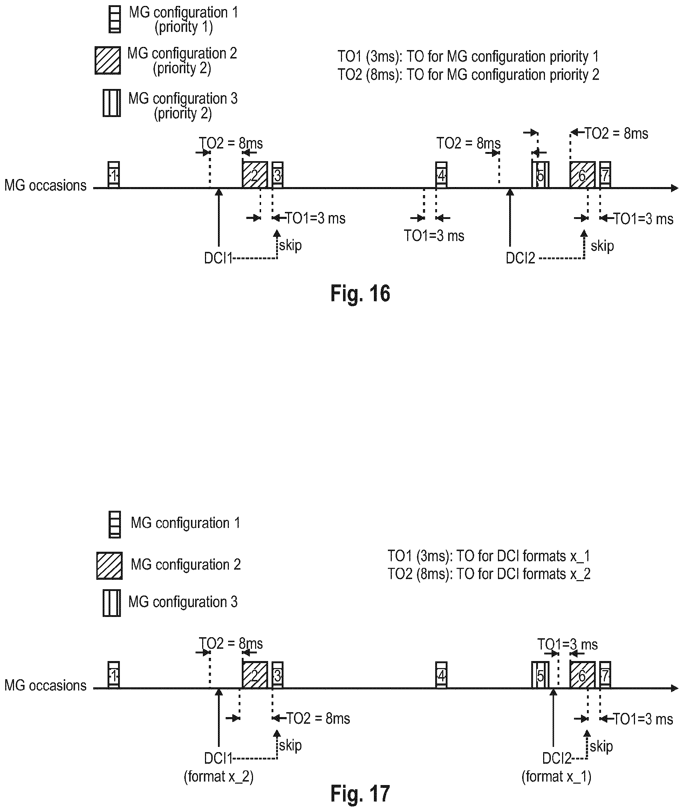

**Fig. 16** illustrates an exemplary implementation of the Second Variant of the Second Solution of the improved MG skipping procedure, wherein the MG configuration priority is used as the relevant characteristic for differentiating between various TO offsets.

Similar assumptions are made for the implementation of Fig. 16, as already done for Fig. 15. However, three different MG configurations are assumed as being configured for the UE.

MG configuration 1 configures a pattern of repeating MGs with a length of 2,5 ms and a periodicity of 40 ms. The MG configuration 2 configures a pattern of repeating MGs with a length of 6 ms and a periodicity of 80 ms. MG configuration 3 configures a pattern of repeating MGs with a length of 4 ms and a periodicity of 120 ms. As before, the two MG configurations 1 and 2 are configured such that in at least one instance, two MGs occur close together in time, here MG 2 of MG configuration 2 being immediately ahead of MG 3 of MG configuration 1 (see also MG 6 immediate ahead of MG 7).

Furthermore, each of the three MG configurations is associated with a priority, e.g. MG configuration 1 is associated with priority 1, while MG configurations 2 and 3 are associated with priority 2.

In accordance with the present Second Variant of the Second solution, it is exemplarily assumed that a first time offset TO1 is configured for priority 1, e.g. having a length of 3 ms. A second time offset TO2 is configured for priority 2, e.g. having a length of 8 ms. As a result, any MG of the MG configuration 1 will have a time offset of 3 ms, and any MG of the MG configurations 2 and 3 will have a time offset of 8 ms. In the example illustrated in Fig. 16, MG 1, MG 3, MG 4, and MG 7 have a TO1 of 3 ms. MG 2, MG 5 and MG 6 have a TO2 of 8 ms.

The time offsets are considered as usual in the MG skipping operation, e.g. according to the first MG skipping rule. This will be illustrated in Fig. 16 with respect to DCI1 and DCI2, respectively carrying a MG skipping indication.

The MG skipping indication of DCI1 is received within the time offset TO2 of MG 2 (of MG configuration 2 with priority 2) and before the time offset TO1 of MG 3. Thus, the MG skipping indication of DCI1 is determined to indicate to skip the MG 3, rather than MG 2. Transmitting the DCI1 before the time offset TO2 of MG 2 (not illustrated) would have resulted in that the MG 2 is skipped.

On the other hand, the MG skipping indication of DCI2 is received within the time offset TO2 of MG 5 (of MG configuration 3 with priority 2) and before the time offset TO2 of MG 6. Thus, the MG skipping indication of DCI2 is determined to indicate to skip the MG 6, rather than MG 5.

As explained in connection with the Second Solution (e.g. First Variant and Second Variant), the time offset of MGs of specific MG configurations can be configured to be relatively long, while the time offset of MGs of other MG configurations can be configured relatively short. By configuring the time offset relatively long for MGs of a first MG configuration, it is possible to provide more time to indicate skipping for MGs of another second MG configuration (e.g. with relatively short time offset). Thus, also the Second Solution allows the gNB more time or even the possibility to transmit a MG skipping indication for only skipping a single MG (here MG 3), even in cases where another MG (here MG 2) occurs just before and interferes with said single MG (MG 3).

The gNB may decide how to set the length of the time offsets for which priority of a MG configuration, e.g. relatively long or short time offsets.

In one example, the gNB is also responsible for configuring the MG configurations and might thus be aware of the problematic scenario that may occur, as discussed above, where MGs of a first MG configuration may occur just before other MGs of another second MG configuration. In order to facilitate skipping MGs of the second MG configuration also in such problematic scenarios, the gNB might decide to set a relatively long time offset for a priority of the first MG configuration, thereby providing more time for sending a MG skipping indication that is considered to indicate the MG of the second MG configuration.

Alternatively, the length of the time offsets could reflect the priority of the MG configuration. For instance, a MG configuration having a low priority is less important, such that skipping said low-priority MGs might be performed more often. In said case, to increase the chances of being able to indicate skipping of such low-priority MGs, the gNB can decide to associate other MG configurations of a higher priority with a relatively-long time offset, compared to the (short) time offset of the low-priority MGs.

As another example, MG configurations with a lower priority could be configured with a longer time offset, thereby ensuring more time for sending a MG skipping indication for a higher-priority MG configuration.

Furthermore, the gNB can exemplarily consider the MG configurations, periodicity, duration, and also slot configurations, and then derive the proper time offset so as to ensure the possibility to send DCI with a MG skipping indication in time.

### Third Solution

According to the Third Solution, the determination of the time offset is additionally based on a characteristic of the DCI carrying the MG skipping indication. Correspondingly, information on the characteristic of the DCI carrying the MG skipping indication corresponds to the additional information mentioned above e.g. in connection with Fig. 8.

This Third Solution is based on an implementation in which the MG skipping indication is carried by a downlink control information message. The DCI message has a particular characteristic, which will be used as part of the Third Solution to differentiate between different time offsets. Correspondingly, after receiving a DCI with a MG skipping indication, the time offset to be used for MGs of the various configured MG configurations is determined based on said characteristic of the DCI carrying the MG skipping indication. This facilitates configuring different time offsets dynamically for each MG skipping indication, thereby introducing adaptive time offsets and increasing the flexibility of the MG skipping procedure.

The Third Solution allows to configure a plurality of different time offsets, for instance different lengths of a time offset, depending on a characteristic of the DCI message carrying the MG skipping indication. Correspondingly, the time offset to be used for MGs of various MG configurations is determined based on said characteristic of the DCI.

The Third Solution can be based on different characteristic of a DCI or a combination thereof.

Exemplarily, different characteristics of a DCI among various that are possible will be presented as different variants of the Third Solution. In more detail, the DCI characteristic is one or more of:
- a format of the DCI message,
- a modulation and coding scheme indicated by the DCI message,
- a resource allocation indicated by the DCI message, and
- a retransmission protocol process ID indicated by the DCI message.

Accordingly, the particular characteristics of a DCI message are each associated with a time offset. Then, determining the time offset for a particular DCI characteristic comprises selecting that time offset, that is associated with the particular DCI characteristic of the DCI message carrying the received MG skipping indication.

In a First Variant of the Third Solution, the characteristic is the DCI format. As presented above in the section "Downlink Control Information", DCI messages can be transmitted in different formats (see Table therein). For instance, a plurality of different DCI formats can be used to transmit a MG skipping indication to the UE, e.g. DCI formats 0_1/1_1 and 0_2/1_2. Each of these DCI formats is associated with one time offset, TO1, TO2, TO3, and TO4.

Alternatively, the DCI formats are grouped, and each group of DCI formats is associated with one time offset, TO1, TO2... For instance, DCI formats x_1 (e.g. 0_1 and 1_1) are grouped together and associated with the same time offset TO1, while DCI formats x_2 (e.g. 0_2, 1_2) are grouped together and associated with the same time offset TO2.

The value of the plural time offsets could be different from one another, but some or all of the time offsets could also have the same value.

When receiving the MG skipping indication in a DCI and when determining the time offset of one or more MGs, that time offset among the plurality is selected, which is associated with the format of the DCI carrying the MG skipping indication.

Consequently, MGs of different MG configurations will have the same time offset, namely the one determined based on the DCI characteristic (here the DCI format).

**Fig. 17** illustrates an exemplary implementation of the First Variant of the Third Solution of the improved MG skipping procedure, wherein the DCI format is used as the relevant characteristic for differentiating between various TO offsets.

Similar assumptions are made for the implementation of Fig. 17, as already done before e.g. for Fig. 16 of the Second Solution. Three different MG configurations are assumed as being configured for the UE. MG configuration 1 configures a pattern of repeating MGs with a length of 2,5 ms and a periodicity of 40 ms. The MG configuration 2 configures a pattern of repeating MGs with a length of 6 ms and a periodicity of 80 ms. MG configuration 3 configures a pattern of repeating MGs with a length of 4 ms and a periodicity of 120 ms. As before, the two MG configurations 1 and 2 are configured such that in at least one instance, two MGs occur close together in time, here MG 2 of MG configuration 2 being immediately ahead of MG 3 of MG configuration 1 (see also MG 6 and MG 7).

Moreover, in accordance with the First Variant of the present Third Solution, DCI formats x_1 (e.g. 0_1 and 1_1) are grouped together and associated with the same time offset TO1 (e.g. 3 ms), while DCI formats x_2 (e.g. 0_2, 1_2) are grouped together and associated with the same time offset TO2 (e.g. 8 ms). As a result, the time offset of various MGs will be the same and depend on the DCI format of the DCI carrying the MG skipping indication.

The time offsets are considered as usual in the MG skipping operation, e.g. according to the first MG skipping rule. This will be illustrated in Fig. 17 with respect to DCI1 and DCI2, respectively carrying a MG skipping indication.

DCI1 is transmitted with a format x_2 (e.g. 0_2). Thus, the associated TO offset is TO2 = 8 ms, which is applied commonly to the subsequent MGs, here both MG 2 (of MG configuration 2) and MG 3 (of MG configuration 1). The DCI1 is received within the time offset TO2 of MG 2 (of MG configuration 2) and before the time offset TO2 of MG 3 (of MG configuration 1). Thus, the MG skipping indication of DCI1 is determined to indicate to skip the MG 3, rather than MG 2. Transmitting the DCI1 before the time offset TO2 of MG 2 (not illustrated) would have resulted in that the MG 2 is skipped.

DCI2 is transmitted with a format x_1 (e.g. 1_1). Thus, the associated TO offset is TO1 = 3 ms, which is applied commonly to the subsequent MGs, here both MG 6 (of MG configuration 2) and MG 7 (of MG configuration 1). The MG skipping indication of DCI2 is received before the time offset TO1 of MG 6. Thus, the MG skipping indication of DCI2 is determined to indicate to skip the MG 6, as being the temporally earliest MG after the DCI2.

According to the Third Solution, the actual time offset depends on the DCI carrying the MG skipping indication. Thus, before receiving a DCI, no time offset need be determined.

A Second Variant of the Third Solution is presented in the following. In particular, the process ID of a retransmission protocol (e.g. a HARQ process ID) as indicated by the DCI is used for differentiating between different time offsets.

In telecommunications, the process ID of a retransmission protocol (such as the HARQ (Hybrid Automatic Repeat reQuest) process ID) is an identifier used to manage the retransmission protocol processes (HARQ processes) involved in data retransmission, e.g. in wireless communication technologies such as LTE, 5G NR, and others. HARQ is a crucial technique to improve the reliability and efficiency of data transmission by combining Forward Error Correction (FEC) with an Automatic Repeat Request (ARQ) mechanism. In one example implementation, each retransmission protocol process is essentially a separate buffer or entity responsible for handling a specific transport block (TB) of data, including retransmissions when necessary. Multiple processes can be differentiated by their ID.

Each of these process IDs is associated with one time offset, TO1, TO2, TO3, TO4, etc. The value of the plural time offsets could be different from one another, but some or all of the time offsets could also have the same value.

When receiving the MG skipping indication in a DCI and when determining the time offset of one or more MGs, that time offset among the plurality is selected, which is associated with the retransmission protocol process ID indicated by said DCI carrying the MG skipping indication.

Consequently, MGs of different MG configurations will have the same time offset, namely the one determined based on the DCI characteristic (here the retransmission protocol process ID indicated by the DCI).

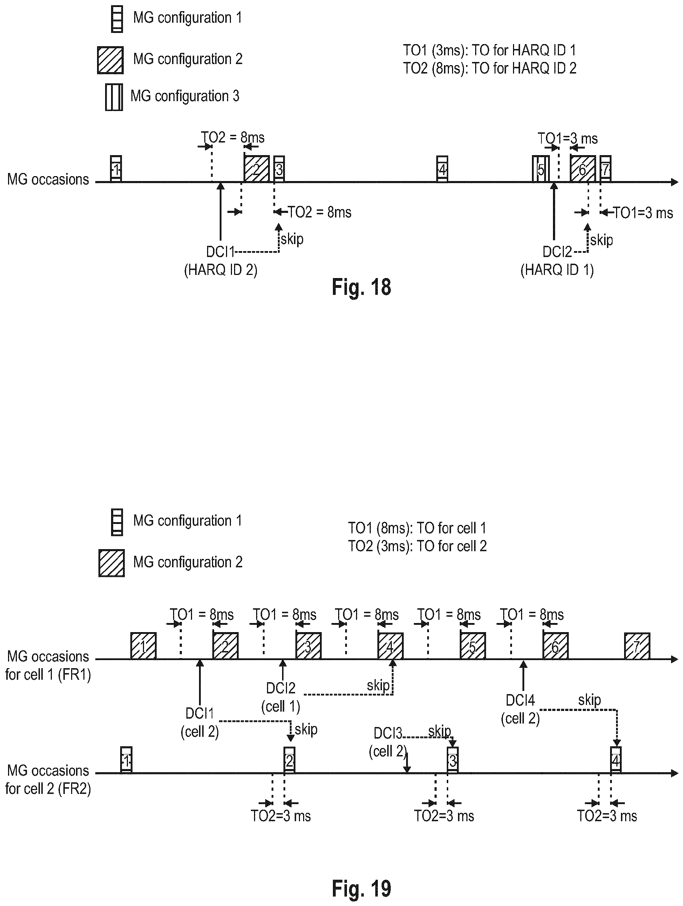

**Fig. 18** illustrates an exemplary implementation of the Second Variant of the Third Solution of the improved MG skipping procedure, wherein a process ID of a retransmission protocol (e.g. HARQ process ID) as indicated by the DCI format is used as the relevant characteristic for differentiating between various TO offsets. Fig. 18 is very similar to Fig. 17, except for using the HARQ ID as the relevant characteristic of the DCI.

Correspondingly, in accordance with the Second Variant of the present Third Solution, HARQ process ID 1 is associated with the time offset TO1 (e.g. 3 ms), while HARQ process ID 2 is associated with the time offset TO2 (e.g. 8 ms). As a result, the time offset of various MGs will be the same and depend on the process ID indicated by the DCI carrying the MG skipping indication.

The time offsets are considered as usual in the MG skipping operation, e.g. according to the first MG skipping rule. This will be illustrated in Fig. 18 with respect to DCI1 and DCI2, respectively carrying a MG skipping indication.

DCI1 is transmitted by the gNB indicating the HARQ process ID 2. Thus, the associated TO offset is TO2 = 8 ms, which is applied commonly to the subsequent MGs, here both MG 2 (of MG configuration 2) and MG 3 (of MG configuration 1). The DCI1 is received within the time offset TO2 of MG 2 (of MG configuration 2) and before the time offset TO2 of MG 3 (of MG configuration 1). Thus, the MG skipping indication of DCI1 is determined to indicate to skip the MG 3, rather than MG 2. Transmitting the DCI1 before the time offset TO2 of MG 2 (not illustrated) would have resulted in that the MG 2 is skipped.

DCI2 is transmitted by the gNB indicating the HARQ process ID 1. Thus, the associated TO offset is TO1 = 3 ms, which is applied commonly to the subsequent MGs, here both MG 6 (of MG configuration 2) and MG 7 (of MG configuration 1). The MG skipping indication of DCI2 is received before the time offset TO1 of MG 6. Thus, the MG skipping indication of DCI2 is determined to indicate to skip the MG 6, as being the temporally earliest MG after the DCI2.

A further Third Variant of the Third Solution is based on another characteristic of the DCI message carrying the MG skipping indication, namely the indicated modulation and coding scheme. The Modulation and Coding Scheme (MCS) is an important parameter that determines how data is transmitted over the air interface. MCS defines both the modulation and the coding rate. The DCI format contains a field for the MCS index, which tells the UE the modulation and coding rate it should use. For instance, this MCS index corresponds to entries in an MCS Table that specifies the modulation type (e.g., QPSK, 16-QAM, 64-QAM) and the coding rate.

Each of these MCS (indexes) is associated with one time offset, TO1, TO2, TO3, TO4, etc. The value of the plural time offsets could be different from one another, but some or all of the time offsets could also have the same value.

When receiving the MG skipping indication in a DCI and when determining the time offset of one or more MGs, that time offset among the plurality is selected, which is associated with the MCS indicated by said DCI carrying the MG skipping indication.

This Third Variant conceptually functions the same as the First and Second Variants of the Third Solution presented above. Thus, the explanations given for Fig. 17 and 18 apply correspondingly to the present Third Variant, and will not be repeated.

A further Fourth Variant of the Third Solution is based on another characteristic of the DCI message carrying the MG skipping indication, namely the indicated resource allocation. The resource allocation refers to the assignment of specific radio resources (e.g. frequency and time) to a UE for transmitting or receiving data over the air interface. The base station (e.g. gNB in 5G NR) manages resource allocation and indicates the resource allocation to the UE in a DCI. In the DCI, the resource allocation can be indicated e.g. as follows.

The resource allocation is indicated in the Downlink Control Information (DCI) e.g. by indicating the resource block, the frequency band, a time resource etc. The resource allocation may further be indicated based on different types, such as Type 0 and Type 1 allocation known from present 5G NR communication systems (e.g. Type 0: bitmap indicates the resource block groups assigned to the UE; Type 1: each resource block is indicated separately).

Some of these different resource allocations that are possible are associated with different time offsets, TO1, TO2, TO3, TO4, etc. For instance, Type 0 and Type 1 resource allocations could be associated with one TO respectively, TO1 and TO2. As another example, different combinations of particular frequency bands and time resources could be respectively associated with different TOs. The value of the plural time offsets could be different from one another, but some or all of the time offsets could also have the same value.

When receiving the MG skipping indication in a DCI and when determining the time offset of one or more MGs, that time offset among the plurality is selected, which is associated with the resource allocation indicated by said DCI carrying the MG skipping indication.

This Fourth Variant conceptually functions the same as the First and Second Variants of the Third Solution presented above. Thus, the explanations given for Fig. 17 and 18 apply correspondingly to the present Fourth Variant, and will not be repeated.

Different from the First and Second Solutions presented above, the Third Solution is not based on configuring different time offsets for different MG configurations. Rather, according to the Third Solution, a common time offset is consistently used for several MG configurations whereas the length of said common time offset is dynamic and adaptive, depending on the characteristic of the DCI message carrying the MG skipping indication.

Because the Third Solution uses a common time offset for the MGs of different MG configurations, the length of time window available for transmitting a MG skipping indication for a MG (in the example of Fig. 17, 18 for MG 3 from start of TO2 of MG 2 to start of TO2 of MG3) stays the same length independent from the length of (common) time offset. However, as apparent from Fig.17 or 18, the gNB is able, by selecting a suitable time offset, to shift the available time window ahead in time. The gNB can control this by appropriately selecting the time offset (e.g. based on using the corresponding DCI format) such that it is possible to avoid that the time window is not usable, e.g. due to the lack of presence of DL slots or of DCI monitoring occasions. In the present scenario of Fig. 17, the time window is shifted to be ahead of the MG 2, thereby allowing the gNB a possibility to reach the UE for skipping MG 3 individually (without having to first skip MG 2).

Therefore, the gNB when deciding how to transmit the MG skipping indication in a DCI to a UE for skipping a MG, decides on the suitable time offset that should be used by the UE to determine which MG to skip. Based on the thus determined time offset, the gNB can then decide on the characteristic of the DCI.

Furthermore, when deciding on the suitable time offset and the timing of transmitting the DCI with the MG skipping indication, the gNB can exemplarily consider the MG configurations, periodicity, duration, and also slot configurations, so as to ensure the possibility to send DCI with a MG skipping indication in time.

One advantage of the Third Solution is the increased flexibility and dynamic nature of the improved MG skipping procedure. Further to allowing the flexibility of configuring different timing offsets, the gNB can decide for each instance of transmitting the MG skipping indication (DCI), which timing offset is to be applied for determining the MG to be skipped in said instance.

### Fourth Solution

According to the Fourth Solution, the determination of the time offset is additionally based on a cell or carrier, to which the MG skipping indication refers. Correspondingly, information on cell or carrier to which the MG skipping indication refers corresponds to the additional information mentioned above e.g. in connection with Fig. 8.

According to one example implementation, the MG skipping indication is carried by a message, such as the downlink control information message, and the cell or carrier is that cell or carrier to which said message refers, For instance, the DCI message can be a scheduling DCI, wherein the scheduling of the DCI refers to a particular carrier or cell.

The present Fourth Solution is applicable to different carrier or different cells.

In the present context, the term cell can be understood as a unit of a radio access network, providing coverage and service to a UE. For example, one cell could be served by one base station (or sector of a base station), and the UE could be scheduled to communication with another cell of another base station (or another sector of the same base station).

On the other hand, the term carrier can be understood as referring to a specific block or band of a frequency spectrum or to a frequency range. A single base station can operate over several carriers.

In the following, a First Variant of the Fourth Solution will be presented, wherein different time offsets are differentiated based on the cell.

Different cells can be differentiated by a different Cell ID.

The First Variant of the Fourth Solution allows to configure a plurality of different time offsets, for instance different lengths of a time offset, depending on a cell. Correspondingly, the time offset to be used for MGs of various MG configurations is determined based on the cell of the MGs. This facilitates configuring different time offsets, thereby introducing adaptive time offsets and increasing flexibility of the MG skipping procedure.

Each of the cells is associated with one time offset, TO1, TO2, TO3, TO4, etc. The value of the plural time offsets could be different from one another, but some or all of the time offsets could also have the same value. But different time offsets will be considered for skipping MGs of different cells.

As a result, all MGs being configured for one cell (e.g. cell 1) will have the same time offset (e.g. TO1), associated to said cell (e.g. cell 1). Conversely, other MGs being configured for another cell (e.g. cell 2) will have in turn also the same time offset (e.g. TO2), however the one associated with said other cell (e.g. cell 2).

When receiving the MG skipping indication and when determining the time offset of one or more MGs, that time offset among the plurality is selected, that is associated with the cell, to which the MG skipping indication refers. In particular, the time offset associated with cell 1 would be selected for determining whether to skip a MG of said cell 1; correspondingly, the time offset associated with cell 2 would be selected for determining whether to skip a MG of said cell 2.

Fig. 19 illustrates an exemplary implementation of the Fourth Solution of the improved MG skipping procedure, wherein a cell is used for differentiating between various TO offsets.

It is exemplarily assumed that the UE is configured with two MG configurations, wherein MG configuration 1 configures a pattern of repeating MGs with a length of 2,5 ms and a periodicity of 40 ms. The MG configuration 2 on the other hand configures a pattern of repeating MGs with a length of 6 ms and a periodicity of 20 ms. The two MG configurations 1 and 2 are perFR specific MG configurations, where MG configuration 1 is used on cell 2 with FR2, and MG configuration 2 is used in cell 1 with FR1.

Furthermore, in accordance with the Fourth Solution, cell 1 is associated with the time offset TO1 (e.g. 8 ms), while cell 2 is associated with the time offset TO2 (e.g. 3 ms). The time offsets are considered as usual in the MG skipping operation, e.g. according to the first MG skipping rule. This will be illustrated in Fig. 19 with respect to DCI1 to DCI4, respectively carrying a MG skipping indication.

As apparent therefrom, all MGs in cell 1 have the time offset associated with said cell 1, i.e. TO1 with 8 ms. In turn, all MGs in cell 2 have the time offset associated with said cell 2, i.e. TO2 with 3 ms.

The DCls that carry the MG skipping indication are scheduling DCls, and thus comprise a resource scheduling for one particular cell, be it cell 1 or cell 2.

It is exemplarily assumed that DCI1 is transmitted from gNB over cell 1 to the UE. DCI1 schedules resources for another cell 2. Therefore, the UE determines that the MG skipping indication is intended to skip a MG of the scheduled cell 2 (not of a different cell, such as cell 1). The UE further determines which MG configured for the scheduled cell 2 is to be skipped. DCI1 is received before the TO2 of MG 2 of cell 2. Thus, the UE determines to skip MG 2 being the earliest MG after receiving the MG skipping indication of DC1.

DCI2 schedules resources for cell 1. Therefore, the UE determines that the MG skipping indication is intended to skip a MG of the scheduled cell 1. The UE further determines which MG configured for the scheduled cell 1 is to be skipped. Since DCI2 is received during the TO1 of MG 3 of cell 1, the UE determines that the MG skipping indication is not intended to skip MG 3, but the subsequent MG 4 of cell 1.

DCI3 schedules resources for cell 2; in this case, the DCI3 is transmitted on cell 2. Therefore, the UE determines that the MG skipping indication is intended to skip a MG of the scheduled cell 2. The UE further determines which MG configured for the scheduled cell 2 is to be skipped. DCI3 is received before the TO2 of MG 3 of cell 2. Thus, the UE determines to skip MG 3 being the earliest MG after receiving the MG skipping indication of DC3.

DCI4 schedules resources for cell 2. Therefore, the UE determines that the MG skipping indication is intended to skip a MG of the scheduled cell 2. The UE further determines which MG configured for the scheduled cell 2 is to be skipped. DCI4 is received before the TO2 of MG 4 of cell 2. Thus, the UE determines to skip MG 4 being the earliest MG after receiving the MG skipping indication of DC4.

As apparent from the above example in Fig. 19, the improved MG skipping procedure according to the Fourth Solution is quite flexible. It allows transmitting the MG skipping indication via different cells. Further, by specifying the cell for scheduling, it is possible to additionally and implicitly indicate the intended target cell for the skipping without additional bits.

Even further, the Fourth Solution allows to configure different time offsets for different cells. Therefore, the length of the time offset can be determined by the gNB to the cell, e.g. to the frequency range used by the cell. For instance, different subcarrier spacings (SCS) (e.g. 15 kHz, 30 kHz, 60 kHz...) can be used by different cells, which has an impact on further operation parameters, such as the OFDM symbol length. The larger the subcarrier spacing, the shorter the OFDM symbol, which may correspond to a shorter transmission/reception time duration; and vice versa. Thus, a shorter time offset could be configured for a cell with a larger SCS, and vice versa.

In the example of Fig. 19, it was assumed that cell 1 operates in the Frequency Range 1, which is the sub-6 GHz frequency range, and typically uses a shorter SCS of 15, 30, or 60 kHz. Cell 2 of Fig. 19 is assumed to operate on Frequency Range 2 (High frequency range of 24.5 GHz to 52.6 GHz), which typically uses a larger SCS of 60 or 120 kHz. Accordingly, a shorter TO2 is configured for cell 2 using the High-Frequency, low-SCS, FR2; and, a longer TO1 is configured for cell 1 using the Low-Frequency, high-SCS, FR1.

Moreover, the Fourth Solution allows the gNB more time or even the possibility to transmit a MG skipping indication for only skipping a single MG.

In the following, a Second Variant of the Fourth Solution will be presented, wherein different time offsets are differentiated based on the carrier. The concepts explained in detail above for the First Variant are equally applicable to the present Second Variant, except that the time offsets are determined based on the relevant carrier (not the relevant cell).

Different carriers can be differentiated by a different carrier ID.

The Second Variant of the Fourth Solution allows to configure a plurality of different time offsets, for instance different lengths of a time offset, depending on a carrier. Correspondingly, the time offset to be used for MGs of various MG configurations is determined based on the carrier of the MGs. Each of the carriers is associated with one time offset, TO1, TO2, TO3, TO4, etc. The value of the plural time offsets could be different from one another, but some or all of the time offsets could also have the same value.

As a result, all MGs being configured for one carrier (e.g. carrier 1) will have the same time offset (e.g. TO1), associated to said carrier (e.g. carrier 1). Conversely, other MGs being configured for another carrier (e.g. carrier 2) will have in turn also the same time offset (e.g. TO2), however the one associated with said other carrier (e.g. carrier 2).

When receiving the MG skipping indication and when determining the time offset of one or more MGs, that time offset among the plurality is selected, that is associated with the carrier, to which the MG skipping indication refers.

This Second Variant conceptually functions the same as the First Variant of the Fourth Solution presented above. Thus, the explanations given for Fig. 19 apply correspondingly to the present Second Variant, and will not be repeated.

In the above Fourth Solution, it was explained that different time offsets are associated with different cells or carriers. As a further alternative, rather than being associated to different cells or carriers, different time offsets can be associated with different frequency ranges, e.g. the FR1 and FR2 as defined for 3GPP 5G NR. Correspondingly, the time offset to be used for MGs of various MG configurations is determined based on the FR of the cell or carrier of the MGs. This also facilitates configuring different time offsets, thereby introducing adaptive time offsets and increasing flexibility of the MG skipping procedure.

Each frequency range (e.g., FR1 and FR 2) is associated with one time offset, TO1, TO2 etc. The value of the plural time offsets could be different from one another, but some or all of the time offsets could also have the same value.

When receiving the MG skipping indication and when determining the time offset of one or more MGs, that time offset among the plurality is selected, that is associated with the Frequency Range of the cell or carrier, to which the MG skipping indication refers. In particular, the time offset associated with FR 1 would be selected for determining whether to skip a MG of a cell that uses FR1; correspondingly, the time offset associated with a FR 2 would be selected for determining whether to skip a MG of a cell that uses FR2.

This variant conceptually functions the same as the First Variant and Second Variant of the Fourth Solution presented above. Thus, the explanations given for Fig. 19 apply correspondingly to the present variant, and will not be repeated.

### Fifth Solution

According to the Fifth Solution, two or more of the First, Second, Third and Fourth Solutions can be combined together, i.e. used together, so as to benefit from the various respective advantages.

In summary, the First Solution provides an improved MG skipping procedure that introduces a guard time duration. The Second Solution provides an improved MG skipping procedure in which different time offsets are differentiated based on a characteristic of the MG configuration. The Third Solution provides an improved MG skipping procedure in which different time offsets are differentiated based on a characteristic of the DCI carrying the MG skipping indication. The Fourth Solution provides an improved MG skipping procedure in which different time offsets are differentiated based on a cell or carrier.

The Fifth Solution allows to provide a more comprehensive solution, combining the different improvements of the First, Second, Third and Fourth Solutions to provide a further improved MG skipping procedure.

In the following, several implementations of possible Fifth Solutions will be presented. The following should only be understood as examples.

A possible First Variant of the Fifth Solution combines the First Solution and the Fourth Solution. Correspondingly, according to the Fourth Solution, the time offsets could be determined based on the cell or carrier. In addition, within each cell or carrier separately, a guard time duration according to the First Solution could be used to further improve the MG skipping procedure.

A possible Second Variant of the Fifth Solution combines the Third Solution and the Fourth Solution. Correspondingly, according to the Fourth Solution, the time offsets could be determined based on the cell or carrier. In addition, within the MG skipping operation for each or carrier, the time offsets could be further dependent on a characteristic of the DCI, carrying the MG skipping indication, in accordance with the Third Solution.

A possible Third Variant of the Fifth Solution combines the Second Solution and the Third Solution. Correspondingly, according to the Second Solution, the time offsets could be determined based on characteristic of the MG configuration, such as the index or priority. In addition, the time offsets could be further dependent on a characteristic of the DCI, carrying the MG skipping indication, in accordance with the Third Solution.

However, the Fifth Solution is not limited to the above exemplary combinations, but rather covers also other combinations of two or more of the First, Second, Third and Fourth Solutions (and their respective variants and implementations).

### Further Implementations

### RRC connection setup and reconfiguration procedures

Interactions between a UE, gNB, and AMF (a 5GC entity) in the context of a transition of the UE from RRC_IDLE to RRC_CONNECTED for the NAS part are described (see 3GPP TS 38.300).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so). The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

### Open-RAN

The base station described in each exemplary embodiment (for example, a 5G NR base station called gNB) may be formed of three functional modules: Centralized Unit (CU), Distributed Unit (DU), and Radio Unit (RU).

CU may also be referred as, for example, a centralized node, an aggregated node, a centralized station, an aggregated station, or a central unit. DU may also be referred as, for example, O-DU (O-RAN Distributed Unit), a distributed node, a distributed station, or a distributed unit. RU may also be referred as, for example, O-RU (O-RAN Radio Unit), a radio apparatus, a radio node, a radio station, an antenna unit, or a radio unit.

Several split options are defined for the functional split configuration (or functional split point) between CU, DU, and RU. The term "functional split point" may also be referred to as "split", "option", or "split option".

Examples of the "split option" include the following split options 1 to 8. The functionality of the base station described in each exemplary embodiment may be split into functions as CU, DU, and RU by one of the following split options 1 to 8. For example, each of CU, DU, and RU may be subjected to functional splitting or functional splitting only between CU and DU or only between DU and RU is possible.
(1) Split Option 1: between RRC (radio resource control) and PDCP
(2) Split Option 2: between PDCP and RLC (High-RLC)
(3) Split Option 3: between High-RLC and Low-RLC
(4) Split Option 4: between RLC (Low-RLC) and MAC (High-MAC)
(5) Split Option 5: between High-MAC and Low-MAC
(6) Split Option 6: between MAC (Low-MAC) and PHY (High-PHY)
(7) Split Option 7: between High-PHY and Low-PHY
(8) Split Option 8: between PHY (Low-PHY) and RF

The functional split point between CU and O-DU may be Split Option 2. The link between CU and O-DU is referred to as midhaul, and the F1 interface is defined by the 3GPP. Further, the link between O-DU and O-RU is referred to as fronthaul and its functional split point may be Split Option 7-2x adopted as the O-RAN fronthaul specifications.

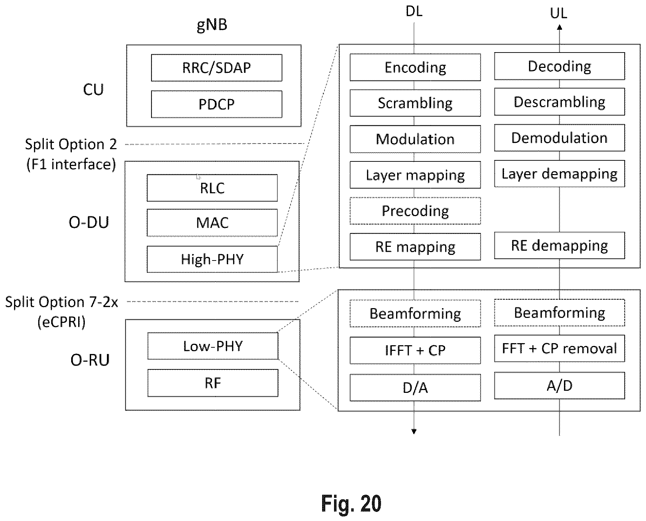

FIG. 20 illustrates an example in which the base station functionality of the gNB is subjected to functional splitting into CU, O-DU, O-RU by Split Option 2 and Split Option 7-2x.

CU may include, for example, an RRC (radio resource control) function, an SDAP (service data adaptation protocol) function, and a PDCP (packet data convergence protocol) function.

O-DU may include, for example, an RLC (radio link control) function, a MAC function, and a higher physical layer (HIGH-PHY) function. Further, the HIGH-PHY function may include an encoding function, a scrambling function, a modulation function, a layer mapping function, a precoding function, and an RE (resource element) mapping function for downlink (DL) transmission. The HIGH-PHY function may also include a decoding function, a descrambling function, a demodulation function, a layer demapping function, and an RE (resource element) demapping function for uplink (UL) reception.

O-RU may include, for example, a LOW-PHY function and an RF function. Further, the LOW-PHY function may include a beamforming function, IFFT (Inverse Fast Fourier Transform) + CP (Cyclic Prefix) addition functions, and a D/A (Digital to Analog) conversion function for downlink transmission. Further, the LOW-PHY function may include an A/D (Analog to Digital) conversion function, CP removal + FFT (Fast Fourier Transform) functions, and a beamforming function for uplink reception.

Note that, in a case where O-DU does not include the precoding function, O-RU may include the precoding function.

O-RU may include an LBT (listen before Talk)-related function.

eCPRI (Evolved Common Public Radio Interface) is defined as a communication scheme between O-DU and O-RU in Split Option 7-2x.

In Split Option 7-2x, a sampling sequence of the in-phase (I) and quadrature (Q) components of an OFDM signal in the frequency domain as well as information used for beamforming in the antenna, a time synchronization signal, and the like are transmitted and received by eCPRI.

Information transmitted by signals (PDCCH, PUCCH, PDSCH, PUSCH, MAC CE, RRC, and the like) described in each exemplary embodiment may be transmitted by using the User Plane (U-Plan) or Control Plane (C-Plane) of eCPRI between O-DU and O-RU.

In a case where a function described in each exemplary embodiment is executed in O-RU by function splitting, O-DU may control O-RU by transmitting information for controlling the function by means of a control signal (for example, eCPRI) between O-DU and O-RU.

In a case where a function described in each exemplary embodiment is executed by function splitting in O-DU, O-RU may receive a result of the execution of the function in O-DU by means of a control signal (for example, eCPRI) and may control O-RU based on the received result.

CU, O-DU, and O-RU may be deployed in physically different apparatuses, the respective functions of which are connected by optical fibers or the like, or some or all of the functions may be deployed in a physically identical apparatus.

CU and O-DU may be logical entities implemented as software operating on a server, such as a cloud, as a virtual Radio Access Network (vRAN). Further, some or all of the functions of CU and O-DU may be provided as services of a Network Functions Virtualization (NFV) function.

The transceiver may not be a radio transceiver and may be, for example, a network transceiver, an optical transceiver, or the like. The radio resource allocated by O-DU may be a resource for radio communication between O-RU and the UE.

### Subband non-overlapping full duplex - SBFD

Operations on uplink, downlink, and sidelink symbols in one exemplary embodiment of the present disclosure may be applied to symbols (for example, SBFD (Subband non-overlapping full duplex) symbols, Subband full duplex) on which an SBFD operation or control is performed. For SBFD symbols, the frequency domain (or frequency resource or frequency bandwidth) is divided into a plurality of frequency domains (also referred to as, for example, sub-bands, RB sets, sub-bandwidths, or sub-BWPs (Bandwidth parts)). The terminal performs transmission and reception in a direction (for example, a downlink or uplink direction) in units of sub-bands that are the divided domains. For SBFD symbols, the terminal may perform transmission/reception in one direction of uplink and downlink directions, and may not perform transmission/reception in the other direction. The base station, on the other hand, may be capable of performing both uplink and downlink transmissions/receptions simultaneously. SBFD symbols may have a fewer frequency domain usable for downlink compared to symbols for which only downlink transmission/reception is performed. Further, SBFD symbols may have a fewer frequency domain usable for uplink compared to symbol for which only uplink transmission/reception is performed.

Further, for SBFD symbols, the terminal may perform uplink and downlink transmissions/receptions simultaneously. At this time, the frequency domain transmitted by the terminal and the frequency domain received by the terminal may not be adjacent and a frequency interval (also referred to as a frequency gap) may be provided therebetween.

Further, sidelink transmission/reception may also be included as a transmission/reception direction in units of sub-bands which are the divided domains.

### XDD - Cross Division Duplex

Operations on uplink, downlink, and sidelink symbols in one exemplary embodiment of the present disclosure may be applied to symbols (for example, Full duplex symbols) on which a Full duplex operation or control is performed. For Full duplex symbols, both the terminal and the base station are capable of performing uplink and downlink transmissions/receptions simultaneously. For Full duplex symbols, the terminal and the base station may operate to perform transmission/reception simultaneously in available frequency domains (or frequency resources or frequency bandwidths) or may operate to perform transmission/reception simultaneously in one or some of frequency domains (that is, may operate to perform transmission or reception in the other frequency domains). At this time, the frequency domain transmitted by the base station or the terminal and the frequency domain received by the base station or the terminal may not be adjacent and a frequency interval (also referred to as a frequency gap) may be provided therebetween. Further, for example, for the purpose of reduction in interference or the like, one of the terminal and the base station may operate to perform transmission/reception simultaneously (that is, the other may operate to perform transmission or reception).

Further, the Full duplex operation may be applied to an operation in which the terminal is capable of performing sidelink transmission/reception simultaneously. Further, the Full duplex operation may be applied to an operation in which the terminal is capable of performing sidelink transmission/reception and uplink or downlink transmission/reception simultaneously.

### Further Variants, including Hardware and Software Implementation of the present disclosure

In the following, variants of the present disclosure will be described.

### (Control Signals)

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

### (Base Station)

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well.

### (Uplink/Downlink/Sidelink)

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### (Data Channels/Control Channels)

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### (Reference Signals)

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### (Time Intervals)

In the present disclosure, time resource units are not limited to one or a combination of slots and symbols, and may be time resource units, such as frames, superframes, subframes, slots, time slot subslots, minislots, or time resource units, such as symbols, Orthogonal Frequency Division Multiplexing (OFDM) symbols, Single Carrier-Frequency Division Multiplexing Access (SC-FDMA) symbols, or other time resource units. The number of symbols included in one slot is not limited to any number of symbols exemplified in the embodiment(s) described above, and may be other numbers of symbols.

### (Frequency Bands)

The present disclosure may be applied to any of a licensed band and an unlicensed band.

### (Communication)

The present disclosure may be applied to any of communication between a base station and a terminal (Uu-link communication), communication between a terminal and a terminal (Sidelink communication), Vehicle to Everything (V2X) communication, and communication between an Ambient loT Reader and an Ambient loT Device. The channels in the present disclosure may be replaced with PSCCH, PSSCH, Physical Sidelink Feedback Channel (PSFCH), PSBCH, PRDCH (Physical Reader-to-Device Channel), PDRCH (Physical Device-to-Reader Channel), PDCCH, PUCCH, PDSCH, PUSCH, and PBCH. For example, control information of the present disclosure may be replaced with any of DCI, UCI, SCI (Sidelink Control Information), R2D Control Information and D2R Control Information.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### (Antenna Ports)

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

### (Ambient loT)

The terminal and the base station in one exemplary embodiment of the preset disclosure may be replaced with any of an Ambient loT Device or an Ambient loT Reader.

The Ambient loT Device may be a wireless communication device having a backscattering function or having a transmission/reception bandwidth of several resource blocks or less. Further, the Ambient loT Reader may be a wireless communication device having a communication function with an Ambient loT Device. The Ambient loT Device may also be referred to as an Ambient loT terminal, an loT terminal, an LPWA terminal, or a Tag.

Further, the various embodiments may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc. It should be further noted that the individual features of the different embodiments may individually or in arbitrary combination be subject matter to another embodiment.

It would be appreciated by a person skilled in the art that numerous variations and/or modifications may be made to the present disclosure as shown in the specific embodiments. The present embodiments are, therefore, to be considered in all respects to be illustrative and not restrictive.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied. Computer-readable medium may be employed to implement the present disclosure, such as a memory storing instructions executable by processing circuitry, or storing other information, configuration registers storing configuration settings, etc., and various combinations thereof.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

### Further Aspects

According to a first aspect, a communication device is provided that includes the following. The communication device includes a processing circuitry, which determines a time offset, which is associated with a measurement gap, MG, and is usable for determining whether to skip the MG or not. Determining the time offset is based on a configuration of a time offset, which defines an initial time offset, and based on additional information.

According to a second aspect provided in addition to the first aspect, the communication device further comprises a transceiver, which receives a MG skipping indication. The processing circuitry determines whether to skip a MG based on the determined time offset and a reception timing of the received MG skipping indication relative to the MG. In an optional implementation, the time offset is between a measurement gap skipping indication, which indicates to skip at least one measurement gap, and a measurement gap, MG, that may be skipped.

According to a third aspect provided in addition to any one of the first to second aspects, the additional information used for determining the time offset is a guard time duration, associated with one particular MG. In an optional implementation, the processing circuitry adjusts a start of an initially configured time offset for another MG, which occurs during the guard time duration of the particular MG and which starts later than the start of the guard time duration, to a start of the guard time duration. In an optional implementation, the processing circuitry determines that a MG skipping indication received during the guard time duration of said particular MG refers to said particular MG. In an optional implementation, the guard time duration starts before and ends with the start of the particular MG.

According to a fourth aspect, provided in addition to the third aspect, the processing circuitry determines the guard time duration based on a configuration message received from a network entity. In an optional implementation, the guard time duration is defined in unit of time, such as ms, symbols, slots or frames. In an optional implementation, determining the guard time duration is such that the determined guard time duration covers a number of slots, or a number of downlink slots, or a number of occasions for receiving a MG skipping indication.

According to a fifth aspect, provided in addition to any one of the first to fourth aspects, the additional information used for determining the time offset is a characteristic of a MG configuration, which configures one or more MGs. In an optional implementation, the MG configuration characteristic is one or more of an index of the MG configuration or a priority of the MG configuration. In an optional implementation, a plurality of MG configurations are configured for the communication device respectively having an index, and wherein each MG configuration is associated with one time offset, and wherein determining the time offset for a particular MG comprises selecting that time offset, which is associated with the MG configuration that configures the particular MG. In an optional implementation, one or a plurality of MG configurations are configured for the communication device, each MG configuration having a priority. Each MG configuration priority is associated with one time offset. Determining the time offset for a particular MG comprises selecting that time offset, which is associated with the priority of the MG configuration that configures the particular MG.

According to a sixth aspect, provided in addition to any one of the first to fifth aspects, the additional information used for determining the time offset is a characteristic of a downlink control information, DCI, message, carrying the MG skipping indication. In an optional implementation, the DCI characteristic is one or more of:
- a format of the DCI message,
- a modulation and coding scheme indicated by the DCI message,
- a resource allocation indicated by the DCI message, and
- a retransmission protocol process ID indicated by the DCI message.

In an optional implementation, the particular characteristics of a DCI message are each associated with a time offset. Determining the time offset for a particular DCI characteristic comprises selecting that time offset, that is associated with the particular DCI characteristic of the DCI message carrying the received MG skipping indication.

According to a seventh aspect, provided in addition to any one of the first to sixth aspects, the additional information used for determining the time offset is a cell or carrier, to which the MG skipping indication refers.in an additional implementation, the cell or carrier is that cell or carrier to which a scheduling of a downlink control information, DCI, message refers, which carries the MG skipping indication. In an optional implementation, each cell or carrier to which the MG skipping indication may refer is associated with a time offset, and wherein determining the time offset comprises selecting that time offset, that is associated with the cell or carrier, to which the MG skipping indication refers. In an optional implementation, determining whether to skip a MG is performed among MGs of the cell or carrier to which the MG skipping indication refers.

According to an eighth aspect, provided in addition to any one of the first to seventh aspects, the MG skipping indication is carried in a downlink control information, DCI, message.

In an alternative, the time offset is used to determine whether a MG skipping indication refers to a MG, and wherein a value of the MG skipping indication indicates whether the referred MG is to be skipped or not.

In a further alternative, determining whether to skip a particular MG comprises determining whether a MG skipping indication is received within or before the time offset of the particular MG, and if the MG skipping indication is received before the time offset, the particular MG is eligible for being skipped, and if the MG skipping indication is received within the time offset, the particular MG is not eligible for being skipped, optionally wherein determining whether to skip a MG comprises determining only one MG, such as the temporally earliest MG after receiving the MG skipping indication, as the particular MG to be skipped.

According to a ninth aspect, a base station is provided comprising the following. Processing circuitry of the base station determines whether to skip a measurement gap, MG, with which a communication device is configured, The processing circuitry and a transceiver generate and transmit a MG skipping indication to the communication device, indicating to skip the determined MG. The MG skipping indication is generated and transmitted to the communication device based on additional information, the additional information being usable by the communication device to determine a time offset, which is associated with the MG that may be skipped.

According to a tenth aspect, provided in addition to the ninth aspect, the additional information used for generating and transmitting the MG skipping indication is a guard time duration, associated with one particular MG. In an optional implementation, a timing of transmitting the MG skipping indication is determined based on the guard time duration, such that the communication device determines the determined MG to be skipped.

According to an eleventh aspect, provided in addition to the ninth or tenth aspect, the processing circuitry configures one time offset for each MG configuration configuring MGs for the communication device, based on a characteristic of the MG configuration, such as an index or priority of the MG configuration.

According to a twelfth aspect, provided in addition to anyone of the ninth to eleventh aspects, the additional information used for generating and transmitting the MG skipping indication is a characteristic of a downlink control information, DCI, message carrying the MG skipping indication. The processing circuity determines one time offset for each characteristic of a DCI message, usable for carrying the MG skipping indication. In an optional implementation, the DCI characteristic is one or more of:
- a format of the DCI message,
- a modulation and coding scheme indicated by the DCI message,
- a resource allocation indicated by the DCI message, and
- a retransmission protocol process ID indicated by the DCI message

According to a thirteenth aspect, provided in addition to any one of the ninth to twelfth aspects, the additional information used for generating and transmitting the MG skipping is a cell or carrier, to which the MG skipping indication refers. The processing circuity determines one time offset for each cell or carrier.

According to a fourteenth aspect, a method is provided comprising the following steps performed by a communication device:
determining a time offset, which is associated with a measurement gap, MG, and is usable for determining whether to skip the MG or not,
wherein determining the time offset is based on a configuration of a time offset, which defines an initial time offset, and based on additional information.

According to a fifteenth aspect, a method is provided comprising the following steps performed by a base station:
determining whether to skip a measurement gap, MG, with which a communication device is configured,
generating and transmitting a MG skipping indication to the communication device, indicating to skip the determined MG, and
wherein the MG skipping indication is generated and transmitted to the communication device based on additional information, the additional information being usable by the communication device to determine a time offset, which is associated with the MG that may be skipped.

According to a sixteenth aspect, an integrated circuit is provided, which, in operation, controls a process of a communication device, the process comprising the following steps performed by the communication device:
determining a time offset, which is associated with a measurement gap, MG, and is usable for determining whether to skip the MG or not,
wherein determining the time offset is based on a configuration of a time offset, which defines an initial time offset, and based on additional information.

According to a seventeenth aspect, an integrated circuit is provided, which, in operation, controls a process of a base station, the process comprising the following steps performed by the base station:
determining whether to skip a measurement gap, MG, with which a communication device is configured,
generating and transmitting a MG skipping indication to the communication device, indicating to skip the determined MG, and
wherein the MG skipping indication is generated and transmitted to the communication device based on additional information, the additional information being usable by the communication device to determine a time offset, which is associated with the MG that may be skipped.

## Claims

1. A communication device, comprising:
processing circuitry, which in operation, determines a time offset, which is associated with a measurement gap, MG, and is usable for determining whether to skip the MG or not,
wherein determining the time offset is based on a configuration of a time offset, which defines an initial time offset, and based on additional information.

2. The communication device according to claim 1, further comprising:
a transceiver, which in operation, receives a MG skipping indication,
wherein the processing circuitry, in operation, determines whether to skip a MG based on the determined time offset and a reception timing of the received MG skipping indication relative to the MG,
optionally wherein the time offset is between a measurement gap skipping indication, which indicates to skip at least one measurement gap, and a measurement gap, MG, that may be skipped.

3. The communication device according to any one of claims 1 to 2, wherein the additional information used for determining the time offset is a guard time duration, associated with one particular MG,
optionally wherein the processing circuitry adjusts a start of an initially configured time offset for another MG, which occurs during the guard time duration of the particular MG and which starts later than the start of the guard time duration, to a start of the guard time duration,
optionally wherein the processing circuitry determines that a MG skipping indication received during the guard time duration of said particular MG refers to said particular MG,
optionally wherein the guard time duration starts before and ends with the start of the particular MG.

4. The communication device according to claim 3, wherein the processing circuitry, in operation, determines the guard time duration based on a configuration message received from a network entity,
optionally wherein the guard time duration is defined in unit of time, such as ms, symbols, slots or frames,
optionally wherein determining the guard time duration is such that the determined guard time duration covers a number of slots, or a number of downlink slots, or a number of occasions for receiving a MG skipping indication.

5. The communication device according to any one of claims 1 to 4, wherein the additional information used for determining the time offset is a characteristic of a MG configuration, which configures one or more MGs,
optionally wherein the MG configuration characteristic is one or more of an index of the MG configuration or a priority of the MG configuration,
optionally wherein a plurality of MG configurations are configured for the communication device respectively having an index, and wherein each MG configuration is associated with one time offset, and wherein determining the time offset for a particular MG comprises selecting that time offset, which is associated with the MG configuration that configures the particular MG,
optionally wherein one or a plurality of MG configurations are configured for the communication device, each MG configuration having a priority, and wherein each MG configuration priority is associated with one time offset, and wherein determining the time offset for a particular MG comprises selecting that time offset, which is associated with the priority of the MG configuration that configures the particular MG.

6. The communication device according to any one of claims 1 to 5, wherein the additional information used for determining the time offset is a characteristic of a downlink control information, DCI, message, carrying the MG skipping indication,
optionally wherein the DCI characteristic is one or more of:
- a format of the DCI message,
- a modulation and coding scheme indicated by the DCI message,
- a resource allocation indicated by the DCI message, and
- a retransmission protocol process ID indicated by the DCI message,
optionally wherein the particular characteristics of a DCI message are each associated with a time offset, and wherein determining the time offset for a particular DCI characteristic comprises selecting that time offset, that is associated with the particular DCI characteristic of the DCI message carrying the received MG skipping indication.

7. The communication device according to any one of claims 1 to 6, wherein the additional information used for determining the time offset is a cell or carrier, to which the MG skipping indication refers,
optionally wherein the cell or carrier is that cell or carrier to which a scheduling of a downlink control information, DCI, message refers, which carries the MG skipping indication,
optionally wherein each cell or carrier to which the MG skipping indication may refer is associated with a time offset, and wherein determining the time offset comprises selecting that time offset, that is associated with the cell or carrier, to which the MG skipping indication refers,
optionally wherein determining whether to skip a MG is performed among MGs of the cell or carrier to which the MG skipping indication refers.

8. The communication device according to any one of claims 1 to 7, wherein the MG skipping indication is carried in a downlink control information, DCI, message, or
optionally wherein the time offset is used to determine whether a MG skipping indication refers to a MG, and wherein a value of the MG skipping indication indicates whether the referred MG is to be skipped or not; or
optionally wherein determining whether to skip a particular MG comprises determining whether a MG skipping indication is received within or before the time offset of the particular MG, and if the MG skipping indication is received before the time offset, the particular MG is eligible for being skipped, and if the MG skipping indication is received within the time offset, the particular MG is not eligible for being skipped, optionally wherein determining whether to skip a MG comprises determining only one MG, such as the temporally earliest MG after receiving the MG skipping indication, as the particular MG to be skipped.

9. A base station comprising:
processing circuitry, which in operation, determines whether to skip a measurement gap, MG, with which a communication device is configured,
the processing circuitry and a transceiver, which in operation, generate and transmit a MG skipping indication to the communication device, indicating to skip the determined MG, and
wherein the MG skipping indication is generated and transmitted to the communication device based on additional information, the additional information being usable by the communication device to determine a time offset, which is associated with the MG that may be skipped.

10. The base station according to claim 9, wherein the additional information used for generating and transmitting the MG skipping indication is a guard time duration, associated with one particular MG,
optionally wherein a timing of transmitting the MG skipping indication is determined based on the guard time duration, such that the communication device determines the determined MG to be skipped.

11. The base station according to claim 9 or 10, wherein the processing circuitry, in operation, configures one time offset for each MG configuration configuring MGs for the communication device, based on a characteristic of the MG configuration, such as an index or priority of the MG configuration.

12. The base station according to any one of claims 9 to 11, wherein the additional information used for generating and transmitting the MG skipping indication is a characteristic of a downlink control information, DCI, message carrying the MG skipping indication,
wherein the processing circuity, in operation, determines one time offset for each characteristic of a DCI message, usable for carrying the MG skipping indication,
optionally wherein the DCI characteristic is one or more of:
- a format of the DCI message,
- a modulation and coding scheme indicated by the DCI message,
- a resource allocation indicated by the DCI message, and
- a retransmission protocol process ID indicated by the DCI message.

13. The base station according to any one of clams 9 to 12, wherein the additional information used for generating and transmitting the MG skipping is a cell or carrier, to which the MG skipping indication refers,
wherein the processing circuity, in operation, determines one time offset for each cell or carrier.

14. A method comprising the following steps performed by a communication device:
determining a time offset, which is associated with a measurement gap, MG, and is usable for determining whether to skip the MG or not,
wherein determining the time offset is based on a configuration of a time offset, which defines an initial time offset, and based on additional information.

15. A method comprising the following steps performed by a base station:
determining whether to skip a measurement gap, MG, with which a communication device is configured,
generating and transmitting a MG skipping indication to the communication device, indicating to skip the determined MG, and
wherein the MG skipping indication is generated and transmitted to the communication device based on additional information, the additional information being usable by the communication device to determine a time offset, which is associated with the MG that may be skipped.
